# EUROPEAN PATENT SPECIFICATION

(11) **EP 3 978 863 B1**
(45) Date of publication and mention of the grant of the patent: **11.06.2025**
(21) Application number: 21199673.1
(22) Date of filing: 29.09.2021
(51) Int. Cl.: G01B 5/20, G01B 11/25

(54) **EYEGLASS FRAME SHAPE MEASUREMENT APPARATUS AND CONTROL PROGRAM FOR EYEGLASS FRAME SHAPE MEASUREMENT APPARATUS**
BRILLENGESTELLFORMMESSGERÄT UND STEUERPROGRAMM FÜR BRILLENGESTELLFORMMESSGERÄT
APPAREIL DE MESURE DE LA FORME D'UNE MONTURE DE LUNETTES ET PROGRAMME DE COMMANDE DE L'APPAREIL DE MESURE DE LA FORME D'UNE MONTURE DE LUNETTES

(30) Priority: 30.09.2020 JP 2020166495; 30.09.2020 JP 2020166496
(43) Date of publication of application: 06.04.2022
(73) Proprietor: Nidek Co., Ltd., Gamagori-Aichi, 443-0038 (JP)
(72) Inventor: MIZUNO, Hirohisa, Gamagori, Aichi, 443-0038 (JP)
(74) Representative: Hoefer & Partner Patentanwälte mbB

(56) References cited:
- WO-A1-2019/026416
- DE-A1- 102006 050 838
- US-A1- 2002 166 247
- US-A1- 2003 191 603
- US-A1- 2014 059 871

## Description

### TECHNICAL FIELD

The present disclosure relates to an eyeglass frame shape measurement apparatus and a control program for an eyeglass frame shape measurement apparatus for obtaining a shape of a rim of an eyeglass frame.

### BACKGROUND

An eyeglass frame shape measurement apparatus is known. The eyeglass frame shape measurement apparatus includes a tracing stylus unit having a tracing stylus pressed against and inserted into a groove of a rim of an eyeglass frame, and measures a shape relating to an entire periphery of the groove of the rim by obtaining a position of the tracing stylus moved along the groove of the rim of (for example, refer to JP-A-2011-122899).

In addition, an eyeglass frame shape measurement apparatus is known. The eyeglass frame shape measurement apparatus includes an optical measurement unit that irradiates a groove of a rim of an eyeglass frame with a measurement light beam and receives a reflection light beam reflected by the groove, and can obtain a cross-sectional shape of the groove of the rim, based on received reflection light (for example, refer to WO 2019/026416 A1).

US 2014/059871 A1 discloses an eyeglass frame shape measuring apparatus which includes: a frame holding unit holding an eyeglass frame; a tracing stylus inserted into a bevel groove of the rim; a moving unit moving the tracing stylus; and a controller which controls the moving unit and obtains measurement data of a shape of the rim. The controller controls the moving unit based on a first measurement operation to perform a first measurement. The controller decides whether the first measurement is performed in a first state in which the tracing stylus is inserted into the bevel groove at the time of starting the first measurement or a second state in which the tracing stylus is not inserted into the bevel groove at the time of starting the first measurement. If the controller decides that it is the second state, the controller performs a second measurement based on a second measurement operation.

DE 10 2006 050838 A1 discloses a measuring method for measuring a workpiece surface on a workpiece using at least one measuring probe, which has a probe body and at least one measuring sensor attached to the probe body, is designed in particular for determining the surface structure of cylindrically curved inner surfaces or outer surfaces on workpieces. At least one optical measuring sensor is used for the measurement and a gap between the measuring sensor and the workpiece surface in a measuring area is filled with a liquid that is transparent to the measuring radiation.

US 2003/191603 A1 discloses an articulated arm having jointed arm segments. The arm includes a measurement probe having an integrated line laser scanner rotatably mounted thereon.

Incidentally, it is conceivable to adopt a configuration as follows. A three-dimensional shape relating to an entire periphery of a groove of a rim and a cross-sectional shape of the groove of the rim can be efficiently obtained by configuring to integrally move a tracing stylus unit and an optical unit.

However, a problem has been found out as follows. An optical measurement unit is added to the tracing stylus unit, thereby increasing a size of the vicinity of a tracing stylus. When the entire periphery of the rim is measured, the optical measurement unit interferes with a rim holding member for holding the rim and a measurement target portion of the rim. Consequently, measurement cannot be satisfactorily performed.

### SUMMARY

The present disclosure technically aims to provide an eyeglass frame shape measurement apparatus and a control program for the eyeglass frame shape measurement apparatus, which enable to satisfactorily measure a three-dimensional shape of a groove of a rim and a cross-sectional shape of a rim groove.

This object is solved by the features of the independent claims. The dependent claims contain advantageous embodiments of the present invention. In order to achieve the above-described object, the present invention includes configurations as follows.

### BRIEF DESCRIPTION OF DRAWINGS

FIG. 1 is an external view of a measurement apparatus.
FIG. 2 is a top view of a frame holding unit.
FIGs. 3A to 3C are views for describing a clamp mechanism.
FIG. 4 is a top perspective view of a target lens shape acquisition unit.
FIG. 5 is a bottom perspective view of a target lens shape acquisition unit.
FIG. 6 is a top perspective view of a Z-direction movement unit and a Y-direction movement unit.
FIG. 7 is a perspective view for describing a schematic configuration of a holding unit.
FIG. 8 is a view for describing a mechanism in which the holding unit holds a support unit.
FIG. 9 is a schematic configuration diagram of a tracing stylus unit and an optical measurement unit.
FIG. 10 is a schematic view illustrating a positional relationship between a light-projecting optical system and a light-receiving optical system of an optical measurement unit.
FIG. 11 is a view illustrating a control system of an eyeglass frame shape measurement apparatus.
FIG. 12 is a flowchart of a program executed by a control unit in the eyeglass frame shape measurement apparatus.
FIGs. 13A and 13B are views illustrating an operation of the holding unit when a measurement starts.
FIGs. 14A and 14B are schematic views illustrating a positional relationship among a clamp pin, a rim, a tracing stylus, and an optical measurement unit, when a shape of a low curve frame is measured.
FIGs. 15A and 15B are schematic views illustrating a positional relationship among the clamp pin, the rim, the tracing stylus, and the optical measurement unit, when the optical measurement unit and the clamp pin interfere with each other.
FIG. 16 is a view illustrating an interference site of the optical measurement unit.
FIGs. 17A and 17B are views for describing a case where the optical measurement unit is moved in a Y-direction to avoid interference.
FIGs. 18A and 18B are views for describing a case where the optical measurement unit is moved in a Z-direction to avoid interference.
FIGs. 19A to 19D are views for describing a case where interference is avoided for an unmeasured portion of a rim.
FIG. 20 is a view for describing an example in which interference is avoided by using a previously acquired measurement result of the rim.
FIG. 21 is a graph illustrating a result of differentiating a measurement result in the Z-direction, out of measurement results of the rim which are acquired by the tracing stylus.
FIGs. 22A and 22B are views for describing an avoidance operation at a measurement point where interference occurs.
FIG. 23 is a view for describing a case where the optical measurement unit is moved in an X-direction to avoid interference.
FIGs. 24A and 24B are schematic views illustrating a positional relationship between the optical measurement unit and the tracing stylus when the optical measurement units are disposed on both right and left sides of the tracing stylus.
FIGs. 25A to 25D are views for describing an avoidance operation of an interfered object when the optical measurement units are disposed on both right and left sides of the tracing stylus.

### DETAILED DESCRIPTION

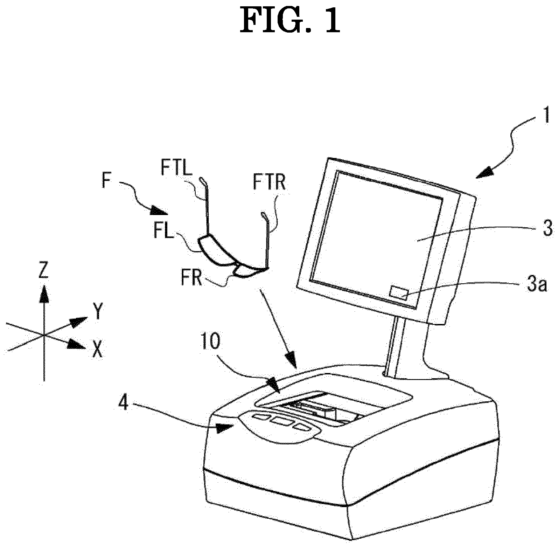

Hereinafter, embodiments in the present disclosure will be described with reference to the drawings. FIGs. 1 to 11 are views for describing a configuration of an eyeglass frame shape measurement apparatus (for example, an eyeglass frame shape measurement apparatus 1) according to the present embodiment. In the present embodiment, a measurement plane when a rim of an eyeglass frame which is an eyeglass frame is measured will be defined as an XY-direction, and a perpendicular direction perpendicular to the XY-direction will be defined as a Z-direction. For example, the measurement plane (XY-plane) will be treated as a radius vector plane. The XY-direction will be treated as a radius vector direction for obtaining radius vector information of the rim. For example, the measurement plane is a plane defined by rim holding members (for example, clamp pins 130a and 130b) disposed at two locations to respectively hold upper sides of the right and left rims (in the present embodiment, upper and lower sides of the eyeglass frame and the rim mean upper and lower side in a longitudinal direction when an eyeglass is worn), out of rim holding members (for example, clamp pins 130a, 130b, 131a, and 131b) for holding the rim of the eyeglass frame, and rim holding members (for example, clamp pins 131a and 131b) disposed at two locations to respectively hold lower sides of the right and left rims. In addition, description will be made with reference to the followings. On the measurement plane, the longitudinal direction (depth direction of the eyeglass frame shape measurement apparatus) which is an upward-downward direction of the eyeglass frame when the eyeglass frame is held by the rim holding member is defined as a Y-direction, and a rightward-leftward direction of the eyeglass frame is defined as an X-direction.

In the present embodiment, for example, the measurement plane is in the horizontal direction. The eyeglass frame shape measurement apparatus illustrated in FIG. 1 is disposed in a state where a rim portion of an eyeglass frame F faces a downward direction and a temple portion of the eyeglass frame F faces an upward direction. That is, when the eyeglass frame F is disposed in the eyeglass frame shape measurement apparatus, right and left rims FL and FR of the eyeglass frame F face the downward direction, and right and left temples FTL and FTR of the eyeglass frame F face the upward direction. As a matter of course, a disposition direction of the eyeglass frame for the eyeglass frame shape measurement apparatus is not limited thereto. For example, a configuration may be adopted so that the eyeglass frame shape measurement apparatus is disposed in a state where the rim portion of the eyeglass frame F faces the upward direction, and the temple portion of the eyeglass frame F faces the downward direction. In addition, for example, the measurement plane may be disposed in a vertical direction. When the eyeglass frame F is disposed in the eyeglass frame shape measurement apparatus, a configuration may be adopted so that upper ends of the right and left rims FL and FR of the eyeglass frame F are disposed to face the downward direction for the eyeglass frame shape measurement apparatus, and lower ends of the right and left rims FL and FR of the eyeglass frame F are disposed to face the upward direction for the eyeglass frame shape measurement apparatus. Alternatively, the upper ends and the lower ends of the right and left rims FL and FR may be reversely disposed. Furthermore, without being limited to the horizontal direction or the vertical direction, the measurement plane may be disposed in an oblique direction.

### [Overview]

For example, the eyeglass frame shape measurement apparatus includes a frame holding means (for example, a frame holding unit 10) configured to hold the eyeglass frame in a measurement state. For example, the frame holding means is means for holding the eyeglass frame while the rightward-leftward direction of the eyeglass frame is defined as the X-direction, the longitudinal direction of the rim of the eyeglass frame is defined as the Y-direction, and a forward-rearward direction of the rim of the eyeglass frame is defined as the Z-direction. For example, the frame holding means has the rim holding member for holding the eyeglass frame in the measurement state. For example, the rim holding members are disposed at two locations to respectively hold the upper sides of the right and left rims, and are disposed at two locations to respectively hold the lower sides of the right and left rims. For example, the two rim holding members disposed at the respective positions are disposed to pinch the rim of the eyeglass frame in a thickness direction thereof (Z-direction). For example, the two rim holding members disposed at the respective positions are configured to be openable and closable in the Z-direction. For example, the frame holding means includes a rim holding member opening and closing means (for example, a clamp mechanism 300) for opening and closing the two rim holding members in the Z-direction. The rim holding member may be a member having a V-shaped groove. In this case, the rim holding member is configured to hold the rim by receiving the thickness direction of the rim in the V-shaped groove.

For example, the eyeglass frame shape measurement apparatus includes a tracing stylus unit (for example, a tracing stylus unit 60). For example, the tracing stylus unit includes a tracing stylus (for example, a tracing stylus 61) to be inserted into the groove of the rim. For example, the tracing stylus unit includes tracing stylus shaft (for example, a tracing stylus shaft 62) having the tracing stylus disposed thereon. In the present embodiment, when the tracing stylus shaft is located in the Z-direction, a tip orientation the tracing stylus (for example, a measurement axis L3) is disposed to extend substantially parallel to the measurement plane with respect to the tracing stylus shaft. However, a configuration is not limited thereto. For example, the tip orientation of the tracing stylus may be disposed to face upward at a prescribed angle (for example, 5 to 15 degrees) with respect to the measurement plane so that a high curve frame easily follows the shape of the rim during a measurement.

For example, the eyeglass frame shape measurement apparatus includes an optical measurement unit (for example, an optical measurement unit 30). For example, the optical measurement unit optically measures a rim shape of a groove of a rim of the eyeglass frame in a noncontact manner. For example, the optical measurement unit includes a light-projecting optical system (for example, a light-projecting optical system 30a) and a light-receiving optical system (for example, a light-receiving optical system 30b). The light-projecting optical system has a light source (for example, a light source 31), and irradiates the groove of the rim of the eyeglass frame with a measurement light beam emitted from the light source. For example, the light-projecting optical system is configured to project slit light to the groove of the rim. For example, the groove of the rim is illuminated in a form of being optically cut by the slit light. For example, the light-receiving optical system has a detector (for example, a detector 37) that receives light. For example, the light-receiving optical system causes the detector to receive the reflection light beam of the measurement light beam emitted for irradiating the groove of the rim of the eyeglass frame by the light-projecting optical system toward, and reflected by the groove of the rim of the eyeglass frame.

For example, the eyeglass frame shape measurement apparatus includes a support unit (for example, a support unit 70) that integrally supports the tracing stylus unit and the optical measurement unit. For example, the support unit has a support member (for example, a tracing stylus shaft 62) that supports the tracing stylus unit and the optical measurement unit. For example, the support unit is configured to support the tracing stylus unit and the optical measurement unit in such a manner that a portion of the tracing stylus shaft having the tracing stylus attached thereto is also used as the support member. For example, the optical measurement unit is attached to the tracing stylus shaft.

For example, the optical measurement unit includes a housing (for example, a cover 30c) that houses the light-projecting optical system and the light-receiving optical system. For example, in a state where the tip of the tracing stylus faces forward, the housing of the optical measurement unit is provided in the support unit so that the whole housing is located on one side in the rightward-leftward direction with respect to the tracing stylus shaft. A configuration may be adopted so that the optical measurement unit is disposed on both the right and left sides with respect to the tracing stylus shaft.

In addition, for example, a configuration is adopted as follows. In a state where the tracing stylus is inserted into the groove of the rim held by the rim holding members when the measurement starts, an upper end of the housing (for example, the cover 30c) of the optical measurement unit is located below a lower end position of the rim holding member (for example, below when the Z-direction is the upward-downward direction) so that the optical measurement unit does not interfere with the rim holding member in the Z-direction. In this manner, it becomes easier to avoid interference between the rim holding member and the rim in the vicinity of the rim holding member during the measurement. In addition, for example, the lower end of the housing of the optical measurement unit may be located above the upper end of the rim holding member. In this manner, it also becomes easier to avoid interference of the optical measurement unit with respect to the rim holding member.

For example, the eyeglass frame shape measurement apparatus includes a holding unit (for example, a holding unit 25) that holds the support unit. For example, the holding unit is configured to hold the support unit to be movable in a direction which the tip of the tracing stylus faces (for example, a direction of the measurement axis L3). For example, the holding unit includes a measurement pressure applying means (for example, a spring 76) for applying a measurement pressure to press the tip of the tracing stylus against the groove of the rim. For example, the holding unit is configured to hold a position of the support unit in the Z-direction to be freely movable.

For example, the eyeglass frame shape measurement apparatus includes changing means (for example, a movement unit 210 and a rotation unit 260) for changing a relative positional relationship between the rim and the support unit. For example, the changing means includes a rotation means (for example, the rotation unit 260) for rotating the support unit around a rotation axis extending in the Z-direction in order to change an XY-direction which the tip of the tracing stylus faces. For example, the rotation means is provided in the holding unit. The rotation means can change the XY-direction (for example, a direction of the measurement axis L3) which the tip of the tracing stylus of the tracing stylus unit faces on the measurement plane in the XY-direction, and the XY-direction of a measurement optical axis (a light-projecting optical axis is defined as L1, and a light-receiving optical axis is defined as L2) of the optical measurement unit.

In addition, for example, the changing means includes an XY-direction changing means for changing a position in the XY-direction of the support unit. The XY-direction changing means includes an X-direction changing means (for example, an X-direction movement unit 240) for changing a position in the X-direction of the holding unit provided with the support unit and a Y-direction changing means (for example, a Y-direction movement unit 230) for changing a position in the Y-direction of the holding unit. In this manner, a follow-up mechanism of the tracing stylus that follows the XY-direction along the groove of the rim is reduced in size, and a weight thereof decreases. Accordingly, a shape of the rim can be accurately measured by the tracing stylus. In addition, for example, the changing means includes a Z-direction changing means (for example, a Z-direction movement unit 220) for changing a position in the Z-direction of the holding unit provided with the support unit. In this manner, a follow-up mechanism of the tracing stylus that follows the Z-direction along the groove of the rim is reduced in size, and a weight thereof decreases. Accordingly, a shape of the rim can be accurately measured by the tracing stylus.

For example, the eyeglass frame shape measurement apparatus includes an interference information acquisition means (for example, a control unit 50). The interference information acquisition means is configured to acquire interference information of an interfered object, which is at least one of the rim of the eyeglass frame placed in a measurement state by the frame holding means and the rim holding member, with respect to the optical measurement unit. For example, the interference information acquired by the interference information acquisition means includes disposition information of the rim holding member in a state where the rim of the eyeglass frame is placed in the measurement state. For example, the interference information acquisition means acquires the disposition information of the rim holding member in at least one direction of the X-direction, the Y-direction, and the Z-direction.

For example, the interference information acquisition means acquires the disposition information in the Y-direction of the rim holding member, based on the position in the Y-direction in which the rim holding member is moved to hold the rim of the eyeglass frame by the frame holding means. For example, the disposition information in the X-direction of the rim holding member is stored as a design value in a storage means. For example, the interference information acquisition means calls and acquires the disposition information in the X-direction of the rim holding member from the storage means. For example, the interference information acquisition means obtains the disposition information in the Z-direction of the rim holding member by obtaining the position in the Z-direction of the rim holding member (rim holding member on a front side of the rim) when the rim is held during the measurement. The interference information acquisition means may store the disposition information in the Z-direction of the rim holding member, as a design value in the storage means. In this case, the interference information acquisition means calls and acquires the disposition information in the Z-direction of the rim holding member from the storage means.

For example, the eyeglass frame shape measurement apparatus includes a control means (for example, the control unit 50) for controlling the changing means. For example, the control means controls the changing means to measure an unmeasured portion of the rim, based on a measured result of the shape of the rim. During the measurement, for example, the control means controls the changing means to avoid interference of an interfering object with respect to the interfered object, based on the interference information acquired by the interference information acquisition means. For example, the interfering object includes at least one of the tracing stylus unit, the optical measurement unit and the support unit. For example, a representative interfering object that interferes with an interfered object during the measurement is the optical measurement unit. However, depending on a shape of the tracing stylus unit, the tracing stylus unit may be the interfering object in some cases. In addition, depending on a shape of the support unit, the support unit may be the interfering object in some cases. For example, when the unmeasured portion of the rim is measured, the control means controls the changing means so that an interference site (for example, an interference region IR) of the interfering object (for example, the optical measurement unit) is separated from the rim holding member in at least one direction of the X-direction, the Y-direction, and the Z-direction, based on the disposition information of the rim holding member. The interference site of the interfering object (for example, the optical measurement unit) may be specified in advance in the housing of the interfering object (for example, the optical measurement unit), and may be stored in the storage means. For example, the interference site can be specified in advance by simulating a positional relationship of the housing of the interfering object (for example, the optical measurement unit) during the measurement, with respect to a shape of the rim of various measurable eyeglass frames. For example, the interference site may be one interference point (for example, an interference point IRP) determined on the interfering object. For example, the interference point is a point determined on the interfering object (for example, the optical measurement unit). When the interference of the interference point is avoided with respect to the interfered object, the interference point is determined as a point where the interference of the whole interference site is avoided. For example, the interference point can be specified in advance by simulating a positional relationship of the housing of the interfering object (for example, the optical measurement unit). In this case, whereas the interference site has a region to a certain extent, a disposition position of one interference point may be calculated. Accordingly, a calculation speed becomes higher, and a smooth measurement can be performed. For example, the control means controls the changing means so that the interference site of the interfering object (for example, the optical measurement unit) is separated (for example, avoided) from the tip of the rim holding member extending inward of the rim by a prescribed distance or longer in the Y-direction. For example, in this case, the control means controls the rotation means. For example, when the unmeasured portion of the rim is measured, the control means controls the XY-direction changing means and the rotation means so that the tracing stylus is located to measure the unmeasured portion of the rim, based on a measured result, and the interference site of the interfering object (for example, the optical measurement unit) is separated from the tip of the rim holding member in the Y-direction by a prescribed distance or longer. In this manner, in the Y-direction, the interference of the interfering object (for example, the optical measurement unit) with respect to the rim holding member can be avoided, and the interference of the interfering object (for example, the optical measurement unit) with respect to the rim located in the vicinity of the rim holding member can be avoided.

For example, the control means sets a determination line (for example, an interference determination line ILCY) substantially parallel to the Y-direction to be separated from the tip of the rim holding member by a prescribed distance or longer in the Y-direction, based on disposition information of the rim holding member. Then, for example, when an unmeasured portion of the rim is measured, the control means controls the changing means so that an interference site of the interfering object (for example, the optical measurement unit) is not closer to a side where the rim holding member is located from the determination line. In this manner, in the Y-direction, the interference of the interfering object (for example, the optical measurement unit) with respect to the rim holding member can be avoided, and the interference of the interfering object (for example, the optical measurement unit) with respect to the rim located in the vicinity of the rim holding member can be avoided.

When the tracing stylus is located in the unmeasured portion of the rim, based on the measured result, the control means controls the changing means to perform the followings. The changing means obtains a first state including an XY-position state of the support unit and a rotation state by the rotation means so that the tip of the tracing stylus faces a predetermined angle direction with respect to the rim (for example, in the XY-direction, on an assumption that an unmeasured rim portion is located in an extension direction of a previously measured rim, to face a normal direction with respect to the extension direction). Thereafter, in this first state, the changing means obtain a deviation amount (for example, ΔE) in the Y-direction in which the interference site of the interfering object (for example, the optical measurement unit) exceeds the determination line. Based on the obtained deviation amount, the changing means moves the interference site of the interfering object (for example, the optical measurement unit) in the Y-direction.

For example, a configuration is adopted so that the optical measurement unit is supported by the support unit at a position that does not interfere with the rim holding member in the Z-direction in a state where the tracing stylus is inserted into the groove of the rim held by the rim holding member when the measurement starts. In a case where the interfering object is the optical measurement unit, for example, when the control means measures the unmeasured portion of the rim, that is, when the interference site of the optical measurement unit is located in a state of being separated from the rim holding member by a prescribed distance or longer in the Z-direction, based on the disposition information of the rim holding member, the control means does not perform an interference avoidance operation in the Y-direction. In this manner, a position of the optical measurement unit is not changed to avoid the interference in the XY-direction. Accordingly, a shape of the rim can be more accurately measured.

For example, the interference information acquired by the interference information acquisition means includes measured information of the rim. In this case, for example, based on the measured information of the rim, the control means controls the changing means so that the interference site of the interfering object (for example, the optical measurement unit) and the interfered object are separated from a measured rim by a prescribed distance or longer in at least one of the X-direction, the Y-direction, and the Z-direction.

For example, a configuration is adopted so that the optical measurement unit is disposed by being biased to one side in the rightward-leftward direction with respect to the tracing stylus when the tracing stylus is viewed in a tip direction thereof. In a case where the interfering object is the optical measurement unit, for example, when the rim is measured, the control means controls the changing means so that the tracing stylus measures the unmeasured portion of the rim prior to the optical measurement unit. Based on the measured information of the rim, the control means controls the changing means so that the interference site of the optical measurement unit and the interfered object are separated from the measured rim by the prescribed distance or longer in at least one of the X-direction, the Y-direction, and the Z-direction.

For example, an interfered site of the rim in the measured information of the rim can be obtained, based on rim cross-sectional information measured by the optical measurement unit. For example, the interfered site of the rim in the measured information of the rim can be further obtained, based on the rim cross-sectional information measured by the optical measurement unit and a measurement result of a three-dimensional shape of the rim which is obtained by the tracing stylus unit. Furthermore, for example, even when the rim cross-sectional information obtained by the measurement of the optical measurement unit is not used, the interfered site in the XY-direction of the rim in the measured information of the rim can be obtained by acquiring the rim information inside the rim with respect to the rim groove in advance, based on the information and the measurement result of the shape of the rim which is obtained by the tracing stylus unit. For example, the interfered site in the Z-direction of the rim in the measured information of the rim can be obtained by acquiring rim thickness information with respect to the rim groove in advance, based on the information and the measurement result of the shape of the rim which is obtained by the tracing stylus unit.

In addition, for example, a configuration is adopted so that the optical measurement unit is supported by the support unit at a position that does not interfere with the rim holding member in the Z-direction in a state where the tracing stylus is inserted into the groove of the rim held by the rim holding member when the measurement starts. Then, in a case where the interfering object is the optical measurement unit, for example, when the unmeasured portion of the rim is measured, when the interference site of the optical measurement unit is located in a state of being separated from the rim holding member by the prescribed distance or longer in the Z-direction, based on the disposition information of the rim holding member, the control means does not perform the interference avoidance operation in the X-direction and the Y-direction.

For example, a configuration is adopted so that the optical measurement unit is disposed by being biased to one side in the rightward-leftward direction with respect to the tracing stylus when the tracing stylus is viewed in a tip direction thereof. In this case, for example, when the rim is measured, the control means controls the changing means so that the tracing stylus measures the unmeasured portion of the rim prior to the optical measurement unit. Then, for example, based on the measured information of the rim, the control means controls the changing means so that the interference site of the optical measurement unit is avoided with respect to the measured rim in at least one of the X-direction and the Y-direction. In this manner, even in a configuration in which the optical measurement unit cannot perform the interference avoidance operation in the Z-direction, the measurement can be performed by avoiding the interference with the rim.

For example, the eyeglass frame shape measurement apparatus may include a selection means for selecting whether or not the eyeglass frame is a high curve frame. In this case, for example, when the high curve frame is selected, the control means controls the changing means to avoid the interference of the interfering object (for example, the optical measurement unit) with the interfered object. On the other hand, when the high curve frame is not selected (for example, when the eyeglass frame is not the high curve frame), the control means does not perform the interference avoidance operation for avoiding the interference of the interfering object with the interfered object. For example, when the interfering object is the optical measurement unit, in a state where the tracing stylus is inserted into the groove of the rim held by the rim holding member when the optical measurement unit starts the measurement, in a configuration in which the optical measurement unit is supported by the support unit a position that does not interfere with the rim holding member in the Z-direction, when the eyeglass frame is the high curve frame, the optical measurement unit is in a state where the interference of the optical measurement unit is avoided with respect to the rim holding member and the rim in the Z-direction. Accordingly, the shape of the rim can be measured as usual without performing the interference avoidance operation in the X-direction and the Y-direction. In this manner, an unnecessary interference avoidance operation can be avoided, and the shape of the rim can be more accurately measured.

For example, the eyeglass frame shape measurement apparatus includes an interference occurrence detection means for detecting whether or not the interference between the interfering object and the interfered object occurs during the measurement of the rim, based on the measurement result of the rim. For example, the interference occurrence detection means detects whether or not the interference occurs, based on a detection result in the Z-direction in the measurement results of the rim.

For example, the eyeglass frame shape measurement apparatus includes a re-measurement performing means for re-measuring the shape of the rim when the interference occurrence detection means detects the occurrence of the interference. For example, in the re-measurement performing means, the control unit may automatically perform the re-measurement, based on the detection result of the interference occurrence detection means. Alternatively, a configuration may be adopted so that the occurrence of the interference between the interfering object and the interfered object during the measurement is displayed on a display means (for example, a monitor 3), and a re-measurement performance signal is input by an operator operating a re-measurement performance switch.

For example, the eyeglass frame shape measurement apparatus includes a measurement point specifying means for specifying a measurement point where the interference between the interfering object and the interfered object occurs, based on the detection result of the interference occurrence detection means. For example, when the specified measurement point is re-measured, the control means controls the changing means to perform the interference avoidance operation different from the interference avoidance operation before the interfering object is re-measured. For example, the eyeglass frame shape measurement apparatus includes a calculation means for calculating a disposition position of the interference site of the interfering object at the measurement point of the specified interference occurrence, based on control information of the changing means (furthermore, may include positional relationship information of the optical measurement unit with respect to the tracing stylus). In this case, for example, when the re-measurement is performed by the re-measurement performing means and the measurement point of the specified interference occurrence is re-measured, the control means controls the changing means so that the interference site is located at a prescribed distance or longer from the disposition position of the interference site calculated by the calculation means. In this manner, the control means perform the interference avoidance operation of the interfering object. In this manner, the shape of the rim can be more accurately and satisfactorily measured.

For example, the re-measurement may be performed by the re-measurement performing means, when the tracing stylus is not completely fallen out from the rim groove while the interfering object and the interfered object (rim or rim holding member) slightly interfere with each other. For example, the re-measurement in this case may be performed after the measurement of the entire periphery of the rim is completed, or may be performed after the measurement is interrupted when the occurrence of the interference is detected by the interference occurrence detection means during the measurement. In addition, for example, the re-measurement may be performed by the re-measurement performing means when the tracing stylus is fallen out from the rim groove due to the interference occurrence. For example, whether or not the tracing stylus is fallen out from the rim groove is detected, based on the measurement result of the rim, since the measurement result of the rim indicates an abnormal value.

For example, when the measurement point of the specified interference occurrence is re-measured, the control means performs the interference avoidance operation in at least one direction of a radius vector direction and a perpendicular direction (X-direction, Y-direction, and Z-direction) perpendicular to the radius vector direction with respect to the disposition position of the interference site calculated by the calculation means.

**In** addition, for example, when the measurement point of the specified interference occurrence is measured, the control means may perform the interference avoidance operation so that the interference point is separated in an inward direction of the rim in at least one direction of the X-direction and the Y-direction with respect to the disposition position of the interference point determined on the interfering object (for example, the optical measurement unit) which is the interference point included in the interference site. In this case, whereas the interference site has a region to some extent, the disposition position of one interference point determined on the interfering object (for example, the optical measurement unit) may be calculated. Accordingly, a calculation speed becomes higher, and a smooth measurement can be performed.

**In** addition, for example, in performing the re-measurement, when a later measurement point after the measurement point of the specified interference occurrence is re-measured, the control means controls the changing means to gradually change a posture state where the optical measurement unit is caused to perform the interference avoidance operation at the measurement point the interference occurrence to a posture state of the optical measurement unit at the time of an original measurement. For example, when a posture state where the interfering object (for example, the optical measurement unit) is caused to perform the interference avoidance operation at the measurement point of the interference occurrence is rapidly returned to a posture state of the interfering object (for example, the optical measurement unit) at the time of the original measurement at the later measurement point after the measurement point of the interference occurrence, an orientation of the tracing stylus (orientation of the measurement axis L3) is rapidly changed with respect to the rim, thereby causing a possibility that measurement accuracy may deteriorate. Therefore, the orientation of the tracing stylus is gradually changed to an angle (for example, 0.5 degrees) that less affects the measurement accuracy. In this manner, without degrading the measurement accuracy, the rim can be satisfactorily measured.

In controlling the posture state of the optical measurement unit at the time of the original measurement to be gradually changed, the number of measurement points at the later measurement points may be determined to have a prescribed value (for example, 50 points, and 1 point is 0.36 degrees of a radius vector angle). An angle at which the optical measurement unit returns to the posture state at the time of the original measurement may be gradually changed by an angle divided by the number of the measurement points.

In addition, when an antecedent measurement point previous to the measurement point of the specified interference occurrence is re-measured, the control means may control the changing means to gradually change the posture state of the interfering object at the time of the original measurement to the posture state where the interference avoidance operation is performed on the interfering object at the measurement point of the interference occurrence. In this manner, without degrading the measurement accuracy, the rim can be satisfactorily measured.

The present disclosure is not limited to the apparatus described in the present embodiment. For example, a control program (software) for fulfilling functions of the above-described embodiment is supplied to a system or an apparatus via a network or various storage media. Then, a control unit (for example, a CPU) of the system or the apparatus can read and execute the program.

For example, the control program for the eyeglass frame shape measurement apparatus includes a control step of controlling the changing means. For example, the control program for the eyeglass frame shape measurement apparatus includes the control step of controlling the changing means to avoid the interference of the interfering object including at least one of the tracing stylus unit, the optical measurement unit, and the support unit with respect to the interfered object including at least one of the rim of the eyeglass frame held by the frame holding means and the rim holding member. The shape of the rim can be satisfactorily measured by causing the control unit of the eyeglass frame shape measurement apparatus to perform the steps.

In addition, the control program may include an interference information acquisition step of acquiring interference information of at least one interfered object of the rim of the eyeglass frame held by the frame holding means and the rim holding member. In this case, the control step includes a step of controlling the changing means to avoid the interference of the interfering object with respect to the interfered object, based on the interference information acquired by the interference information acquisition step.

In addition, for example, the control program for the eyeglass frame shape measurement apparatus includes a control step of controlling the changing means to measure the unmeasured portion of the rim, based on the measured result of the shape of the rim. For example, the control program for the eyeglass frame shape measurement apparatus includes an interference occurrence detection step of detecting whether or not the interference between interfered object being at least one of the rim and the rim holding member and the interfering object occurs during the measurement of the rim, based on the measurement result of the rim. For example, the control program for the eyeglass frame shape measurement apparatus includes a re-measurement performance step of performing the re-measurement on the shape of the rim when the interference occurrence is detected by the interference occurrence detection step. For example, the control program for the eyeglass frame shape measurement apparatus includes a measurement point specifying step of specifying the measurement point where the interference with the rim occurs, based on the detection result of the interference occurrence detection step. For example, in the control step, the re-measurement is performed by the re-measurement performance step. When the specified measurement point is re-measured, the changing means is controlled to perform the interference avoidance operation different from the interference avoidance operation performed before the re-measurement of the interfering object.

For example, the control program for the eyeglass frame shape measurement apparatus may include a calculation step of calculating the disposition position of the interference site of the interfering object at the measurement point of the specified interference occurrence, based on the control information of the changing means. In this case, the control step is a step of performing the interference avoidance operation of the optical measurement unit by controlling the changing means so that the interference site is separated from the disposition position of the interference site calculated by the calculation step. The steps are performed by the control unit of the eyeglass frame shape measurement apparatus so that the shape of the rim can be satisfactorily measured in the re-measurement when the interference occurs.

### [Embodiments]

One of typical embodiments of the present disclosure will be described with reference to the drawings.

FIG. 1 is a schematic external view of the eyeglass frame shape measurement apparatus.

For example, the eyeglass frame shape measurement apparatus 1 includes a monitor 3, a switch unit 4, a frame holding unit 10, and a target lens shape acquisition unit 20. The monitor 3 displays various information (for example, a cross-sectional shape in a rim groove FA of a rim Ri and a shape of the rim of the eyeglass frame F). The monitor 3 is a touch panel, and the monitor 3 may also function as the switch unit 4. The switch unit 4 is used for performing various settings (for example, measurement starting). A signal corresponding to an operation instruction input from the monitor 3 and the switch unit 4 is output to a control unit 50 (to be described later). The eyeglass frame shape measurement apparatus 1 may be incorporated in a lens processing apparatus as in JP-A-2000-314617. For example, the target lens shape acquisition unit 20 includes the optical measurement unit that irradiates the groove of the rim Ri (for example, a left rim RIL or a right rim RIR) of the eyeglass frame F held by the frame holding unit 10 with a measurement light beam, and acquires a cross-sectional shape of the rim groove FA of the eyeglass frame F by receiving a reflection light beam thereof. In addition, for example, the target lens shape acquisition unit 20 includes a tracing stylus unit 60 that measures the shape of the rim Ri by inserting the tracing stylus into the groove of the rim (for example, the left rim RIL or the right rim RIR) of the eyeglass frame F held by the frame holding unit 10 and detecting a movement of the tracing stylus. For example, the target lens shape acquisition unit 20 is disposed on a lower side of the frame holding unit 10.

### <Frame Holding Unit>

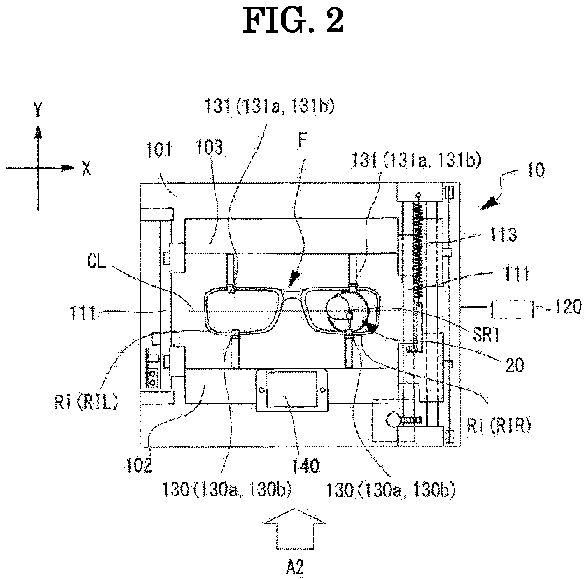

FIG. 2 is a top view of the frame holding unit 10 holding the eyeglass frame F. The frame holding unit 10 holds the eyeglass frame F in a desired state. For example, the frame holding unit 10 includes a holder base 101, a front slider 102, a rear slider 103, and an opening and closing movement mechanism 110.

For example, the front slider 102 and the rear slider 103 for holding the eyeglass frame F (rim Ri) are placed on the holder base 101. For example, the front slider 102 and the rear slider 103 are disposed to be slidable on two rails 111 extending in the Y-direction while facing each other around a center line CL, and are always pulled by a spring 113 in a direction toward the center line CL of both of these.

For example, clamp pins 130a and 130b as an example of the rim holding member for clamping the rim Ri of the eyeglass frame F in a thickness direction (Z-direction) each are disposed at two locations in the front slider 102. For example, clamp pins 131a and 131b as an example of the rim holding member for clamping the rim Ri of the eyeglass frame F in the thickness direction (Z-direction) each are disposed at two locations in the rear slider 103. In addition, for example, when a template is measured, the front slider 102 and the rear slider 103 are opened, and a well-known template holding jig is disposed and used at a predetermined mounting position 140. For example, as a configuration of the frame holding unit 10, a well-known configuration disclosed in JP-A-2000-314617 can be used.

For example, in the eyeglass frame F, a lower side of the rim when eyeglasses are worn is located on the front slider 102 side, and an upper side of the rim Ri is located on the rear slider 103 side. For example, the eyeglass frame F is held in a predetermined measurement state by the clamp pins located on the lower side and the upper side of the respective right and left rims Ri.

A configuration may be adopted so that an open and closed state of the front slider 102 and the rear slider 103 in the Y-direction is detected by a detector 120 (for example, an encoder). In this case, detection information of the detector 120 is used to acquire disposition information of the clamp pins (130a and 131a) in the Y-direction during the measurement.

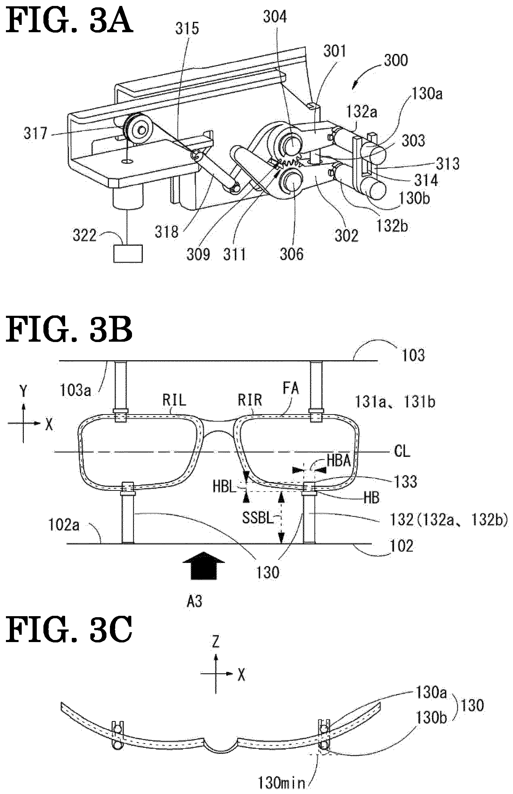

FIGs. 3A to 3C are views for describing a clamp mechanism 300 of clamp pins 130a and 130b for holding the rim Ri. The clamp mechanism 300 is disposed on each of the front slider 102 and the rear slider 103, corresponding to the clamp pins 130a, 130b, 131a, 131b disposed at four locations. FIG. 3A is a schematic configuration diagram of the clamp mechanism 300 disposed on the left side of the front slider 102 to clamp the lower side of the left rim RIL. FIG. 3B is a view for describing a positional relationship among the clamp pins 130 and 131, the front slider 102, the rear slider 103, and the rim Ri serving as a measurement target. FIG. 3C is a view when the rim Ri held by the clamp pins 130 (130a and 130b) in FIG. 3B is observed in a direction of an arrow A3.

The clamp pin 130a is attached to a tip of a first arm 301 via a support shaft 132a. The clamp pin 130b is attached to a tip of a second arm 302 via a support shaft 132b. The first arm 301 is held to be rotatable by a shaft 304. The second arm 302 is held to be rotatable by a shaft 306. A compression spring 303 is attached between the first arm 301 and the second arm 302. A distance between the two clamp pins 130a and 130b is biased in a direction which is always open by the compression spring 303. In addition, a gear 309 located around the shaft 304 is formed in a central portion of the first arm 301. Similarly, a gear 311 located the shaft 306 is formed in a central portion of the second arm 302, and the gear 309 meshes with the gear 311. One end of a spring 318 is attached to a rear end of the first arm 301. A wire 315 is fixed to the other end of the spring 318. The wire 315 is wound by a motor 322 via a pulley 317. The motor 322 is driven so that the clamp pin 130a attached to the first arm 301 and the clamp pin 130b attached to the second arm 302 are opened and closed in conjunction with each other.

In addition, a U-shaped rim receiver 313 with which the rim Ri is brought into contact is disposed between the clamp pin 130a and the clamp pin 130b. The rim receiver 313 is fixed to the support shaft 132b on the lower side. A groove 314 is formed in the rim receiver 313, and the support shaft 132a of the clamp pin 130b is configured to pass through the groove 314. According to this configuration, the rim Ri is brought into contact with the rim receiver 313, and a position of the rim Ri in the Y-direction is restricted. The two clamp pins 130a and 130b are closed so that the rim Ri is held by the clamp pins 130a and 130b.

As a length SSBL in which the support shafts 132a and 132b protrude in the Y-direction from each of facing surfaces 102a and 103a of the sliders 102 and 103, the optical measurement unit 30 (to be described later) is disposed to have a length that does not interfere with the sliders 102 and 103, even when the optical measurement unit 30 is disposed on the lower side of the clamp pin 130b during measurement and moves close to the sliders 102 and 103. In addition, a length HBL from the rim receiver 313 to a tip position 133 of the clamp pins 130a and 130b extending in the Y-direction and a width HBA (XY-position) in the X-direction of the clamp pins 130a and 130b are stored in advance in a memory 52 (to be described later) as the interference information. In addition, when the clamp pin 130b holds the measurable rim Ri, a lowermost end position 130min in the Z-direction where the clamp pin 130b is located is also stored in advance in the memory 52 as the interference information. When the optical measurement unit 30 interferes with the rim receiver 313 during the measurement, the width of the rim receiver 313 in the X-direction and the lowermost end position in the Z-direction may be stored in advance in the memory 52 as the interference information of the interfered object.

In the present embodiment, the clamp pins 130a, 130b, 131a, and 131b have been described as an example of the configuration of the rim holding member for holding the rim Ri. However, without being limited thereto, a well-known mechanism may be used. For example, as the rim holding member, a V-shaped groove may be provided. In this case, the rim Ri is received by the V-shaped groove, and a Z-direction position and a Y-direction position of the rim Ri are restricted.

### <Target Lens Shape Acquisition Unit>

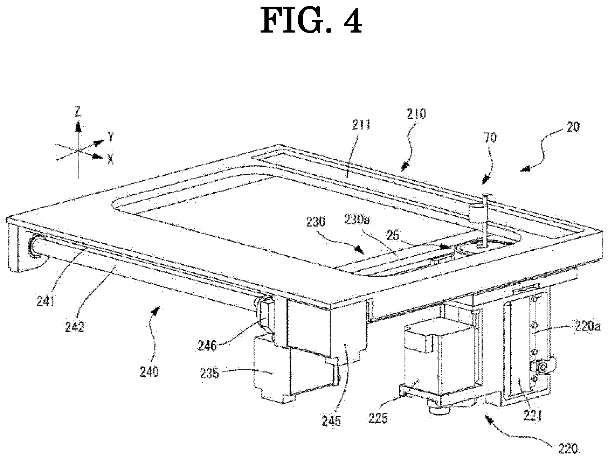

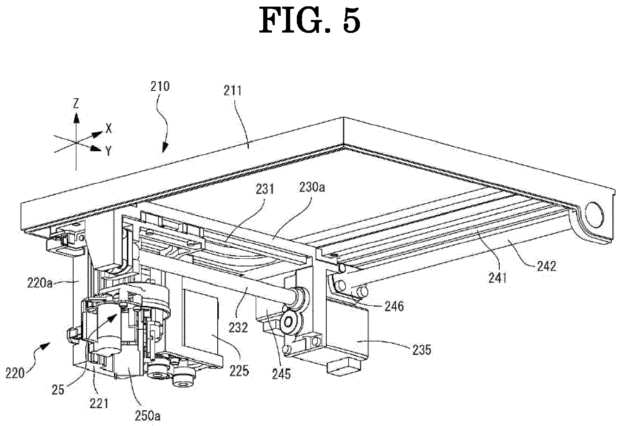

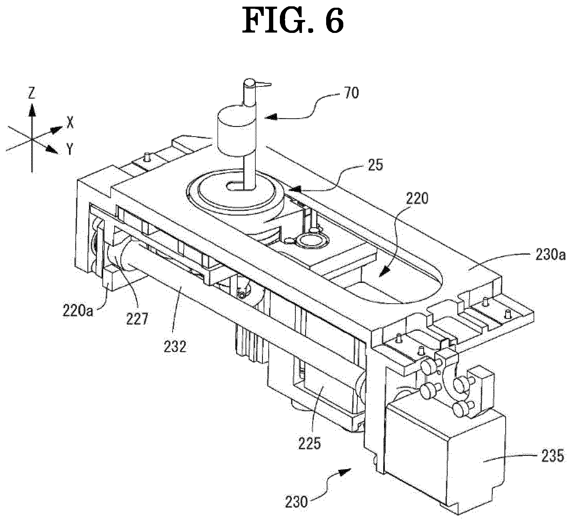

FIGs. 4 to 6 are views for describing the target lens shape acquisition unit 20. FIG. 4 is a top perspective view of the target lens shape acquisition unit 20. FIG. 5 is a bottom perspective view of the target lens shape acquisition unit 20. FIG. 6 is a top perspective view (perspective view illustrating a state where a base portion 211 and a X-direction movement unit 240 are detached) of a Z-direction movement unit 220 and a Y-direction movement unit 230 (to be described later).

The target lens shape acquisition unit 20 is disposed in a lower portion of the frame holding unit 10. For example, the target lens shape acquisition unit 20 includes the base portion 211, the holding unit 25, and the movement unit 210.

The base portion 211 is a rectangular frame stretching in the X-direction and the Y-direction, and is provided in a lower portion of the frame holding unit 10. The holding unit 25 holds the tracing stylus unit 60 and the optical measurement unit 30 (to be described later). In addition, the holding unit 25 includes the rotation unit 260. The rotation unit 260 rotates a rotation base 261 around a rotation axis L0 to change the XY-direction which the tracing stylus 61 included in the tracing stylus unit 60 (to be described later) faces and the XY-direction which an opening portion 38 included in the optical measurement unit 30 faces. The movement unit 210 moves the holding unit 25 in the X-direction, the Y-direction, and the Z-direction to relatively move the holding unit 25 with respect to the rim Ri of the eyeglass frame F.

### <Movement Unit>

For example, the movement unit 210 includes the base portion 211, the Z-direction movement unit 220, the Y-direction movement unit 230, and the X-direction movement unit 240. For example, the base portion 211 is a rectangular frame stretching in the X-direction and the Y-direction, and is disposed in the lower portion of the frame holding unit 10. For example, the Z-direction movement unit 220 moves the holding unit 25 in the Z-direction. For example, the Y-direction movement unit 230 holds the holding unit 25 and the Z-direction movement unit 220, and moves both of these in the Y-direction. For example, the X-direction movement unit 240 holds the holding unit 25, the Z-direction movement unit 220, and the Y-direction movement unit 230, and moves all of these in the X-direction.

For example, the X-direction movement unit 240 is schematically configured as follows. For example, the X-direction movement unit 240 includes a guide rail 241 extending in the X-direction below the base portion 211. For example, a Y-base 230a of the Y-direction movement unit 230 is attached to the guide rail 241 to be movable in the X-direction. For example, a motor 245 is attached to the base portion 211. For example, a feed screw 242 extending in the X-direction is attached to a rotary shaft of the motor 245. For example, a nut portion 246 fixed to the Y-base 230a is screwed to the feed screw 242. In this manner, when the motor 245 is rotated, the Y-base 230a is moved in the X-direction.

For example, the Y-direction movement unit 230 is schematically configured as follows. For example, a guide rail (not illustrated) extending in the Y-direction is attached to the Y-base 230a. For example, a Z-base 220a is attached to the guide rail to be movable in the Y-direction. For example, a motor 235 for moving in the Y-direction and a rotatable feed screw 232 extending in the Y-direction are attached to the Y-base 230a. For example, the rotation of the motor 235 is transmitted to the feed screw 232 via a rotation transmission mechanism such as a gear. For example, a nut 227 attached to the Z-base 220a is screwed to the feed screw 232. In this manner, when the motor 235 is rotated, the Z-base 220a is moved in the Y-direction.

For example, the X-direction movement unit 240 and the Y-direction movement unit 230 configure an XY-direction movement unit. For example, a movement position of the holding unit 25 in the XY-directions is detected by the control unit 50 (to be described later) which detects the number of pulses for driving the motor 245 and the motor 235. For example, the movement position of the holding unit 25 in the XY-directions may be detected by using a sensor such as an encoder attached to the motors 245 and 235.

For example, the Z-direction movement unit 220 is schematically configured as follows. For example, a guide rail 221 extending in the Z-direction is formed in the Z-base 220a, and a movement base 250a to which the holding unit 25 is attached is held along the guide rail 221 to be movable in the Z-direction. For example, a pulse motor 225 for moving in the Z-direction is attached to the Z-base 220a, and a feed screw (not illustrated) extending in the Z-direction is attached thereto to be rotatable. For example, the feed screw is screwed to a nut attached to the base 250a of the holding unit 25. For example, the rotation of the motor 225 is transmitted to the feed screw 222 via a rotation transmission mechanism such as a gear, and the rotation of the feed screw 222 causes the holding unit 25 to move in the Z-direction.

For example, the movement position of the holding unit 25 in the Z-direction is detected by the control unit 50 (to be described later) which detects the number of pulses for driving the motor 225. For example, the movement position of the holding unit 25 in the Z-direction may be detected by using a sensor such as an encoder attached to the motor 225.

Each of the movement mechanisms in the X-direction, the Y-direction, and the Z-direction as described above is not limited to the present embodiment, and a well-known mechanism can be adopted. For example, instead of linearly moving the holding unit 25, a configuration may be adopted so that the holding unit 25 is moved by arc actuation around the center of the rotation base 261 (for example, refer to JP-A-2006-350264).

### <Holding Unit and Support Unit>

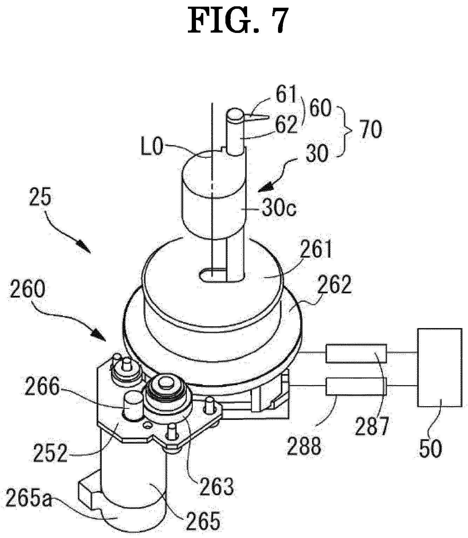

Next, a configuration of the holding unit 25 will be described with reference to FIGs. 7 to 10. FIG. 7 is a perspective view for describing a schematic configuration of the holding unit 25. The holding unit 25 includes the support unit 70.

The support unit 70 includes the tracing stylus unit 60 and the optical measurement unit 30. The tracing stylus unit 60 includes the tracing stylus 61 inserted into the groove of the rim, and a tracing stylus shaft 71 having the tracing stylus 61 disposed on the upper side. The optical measurement unit 30 includes a cover 30c serving as a housing that houses the light-projecting optical system and the light-receiving optical system. The support unit 70 is configured to integrally support the tracing stylus unit 60 and the optical measurement unit 30. The present embodiment adopts a configuration in which a lower portion of the tracing stylus shaft 62 also serves as a support unit 70, and the optical measurement unit 30 is attached to the tracing stylus shaft 62. The support unit 70 may have a configuration in which the tracing stylus unit 60 and the optical measurement unit 30 are integrally supported. For example, a configuration may be adopted as follows. Without attaching the optical measurement unit 30 to the tracing stylus shaft 62, a support member integrally supports the tracing stylus shaft 62 and the optical measurement unit 30.

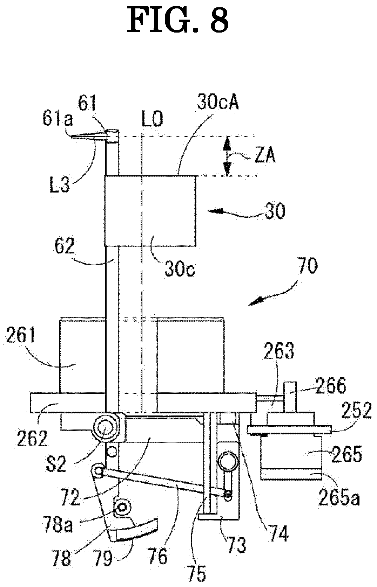

In addition, as illustrated in FIG. 8, a configuration is adopted so that the optical measurement unit 30 is supported by the support unit 70 at a position that does not interfere with the clamp pin 130 in the Z-direction in a state where the tracing stylus 61 is inserted into the groove of the rim held by the clamp pin 130 when the measurement starts. That is, when the tracing stylus shaft 62 is located substantially parallel to the Z-direction, a distance ZA (distance in the Z-direction) of an upper surface 30cA of the cover 30c with respect to a tip 61a of the tracing stylus 61 is a distance that does not interfere with the clamp pin 130b in a state where the tracing stylus 61 is inserted into the groove of the rim held by the clamp pin 130 when the measurement starts.

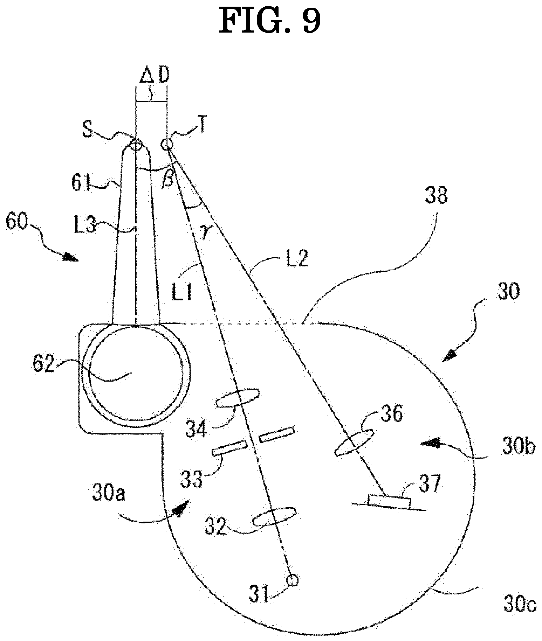

In addition, when viewed in a direction of the tip 61a of the tracing stylus 61, a configuration is adopted so that the optical measurement unit 30 is disposed by being biased to one of the rightward-leftward direction with respect to the tracing stylus 61 (refer to FIGs. 7 and 9). In the present embodiment, the optical measurement unit 30 is disposed by being biased to the left side with respect to the tracing stylus 61.

The holding unit 25 holds the support unit 70 to be movable in a direction which the tip 61a of the tracing stylus 61 faces (direction of the measurement axis L3 in FIG. 9), and is configured to hold a position of the support unit 70 in the Z-direction to be freely movable. Furthermore, the holding unit 25 includes the rotation unit 260 for changing the XY-direction which the tip 61a of the tracing stylus 61 of the tracing stylus unit faces and the XY-direction of the measurement optical axis (in FIG. 9, the light-projecting optical axis is defined as L1, and the light-receiving optical axis is defined as L2) of the optical measurement unit 30.

Hereinafter, a configuration of each unit included in the holding unit 25 will be described.

### <Rotation Unit>

For example, the rotation unit 260 includes the rotation base 261. As illustrated in FIG. 7, the support unit 70 is disposed in the rotation base 261. For example, the rotation base 261 is held to be rotatable around a rotation axis LO extending in the Z-direction. For example, a large diameter gear 262 is formed on an outer periphery of a lower portion of the rotation base 261. For example, the rotation unit 260 has an attachment plate 252. For example, the motor 265 is attached to the attachment plate 252. For example, a pinion gear 266 is fixed to a rotary shaft of the motor 265, and the rotation of the pinion gear 266 is transmitted to the large diameter gear 262 via a gear 263 provided to be rotatable in the attachment plate 252. Therefore, the rotation of the motor 265 causes the rotation base 261 to rotate around the rotation axis LO. For example, the rotation of the motor 265 is detected by an encoder 265a integrally attached to the motor 265, and a rotation angle of the rotation base 261 is detected from an output of the encoder 265a. An origin position of the rotation of the rotation base 261 is detected by an origin position sensor (not illustrated).

### <Holding Mechanism for Support Unit by Holding Unit>

FIG. 8 is a view describing a mechanism in which the holding unit 25 holds the support unit 70 to be movable in a direction which the tip 61a of the tracing stylus 61 faces, and a mechanism in which the support unit 70 is held to be movable in the Z-direction.

For example, the holding unit 25 includes a shaft 74 fixed to a lower portion of the rotation base 261 and extending in the Z-direction. The shaft 74 includes a tubular member 73 that can move in the Z-direction. Then, a Z-movement support base 72 is fixed to the tubular member 73. A lower portion of the tracing stylus shaft 62 which also serves as the support unit 70 is held by the Z-movement support base 72 to be tilted in a direction of the tip 61a of the tracing stylus 61 around a shaft S2. That is, the support unit 70 is held by the holding unit 25 to be movable in the direction of the tip 61a of the tracing stylus 61, and the support unit 70 is held by the holding unit 25 to be movable in the Z-direction. A movement position of the support unit 70 in the Z-direction with respect to the holding unit 25 (rotation unit 260) is detected by an encoder 287 which is an example of the detector.

A spring 75 for balancing a load of the support unit 70 is disposed between the rotation base 261 and the tubular member 73. A biasing force of the spring 75 may be generated so that a measurement pressure is slightly applied in an upward direction. In this manner, when the rim Ri is measured, the tracing stylus 61 is always in a state where the measurement pressure is applied in the upward direction.

In FIG. 8, a rotation angle detection plate 79 is attached to the tracing stylus shaft 62 below the shaft S2 via an attachment member 78. A rotation amount of the rotation angle detection plate 7 rotated around the shaft S2 is detected by an encoder 288 which is an example of the detector. That is, a tilt amount of the tracing stylus shaft 62 is detected by the encoder 288.

In addition, a spring 76 which is an example of the measurement pressure applying means for applying the measurement pressure in a tip direction of the tracing stylus 61 is disposed between the attachment member 78 and the tubular member 73. The spring 76 always applies a biasing force so that the tracing stylus shaft 62 is tilted in the tip direction of the tracing stylus 61. In an initial state during the measurement of the rim Ri, the attachment member 78 comes into contact with a limitation member 78a. In this manner, the tilt of the tracing stylus shaft 62 is limited to a state in FIG. 8 (state where the tilt of the tracing stylus shaft 62 is zero with respect to the Z-direction). In the initial state during the measurement, the tracing stylus shaft 62 may be in a state of being slightly tilted in a direction opposite to the tip direction of the tracing stylus 61 (for example, tilted by 2 to 5 degrees with respect to the Z-direction).

### < Tracing Stylus Unit>

FIG. 9 is a schematic view when the support unit 70 in FIG. 7 is viewed from above. For example, the tracing stylus unit 60 is used to acquire the shape of the rim Ri of the eyeglass frame F (for example, a target lens shape of the rim Ri). The tracing stylus unit 60 includes the tracing stylus 61 and the tracing stylus shaft 62. For example, the tracing stylus 61 is attached to the tracing stylus shaft 62. In the present embodiment, a direction from the tracing stylus shaft 62 to the tip 61a of the tracing stylus 61 is defined as the measurement axis L3.

### <Optical Measurement Unit>

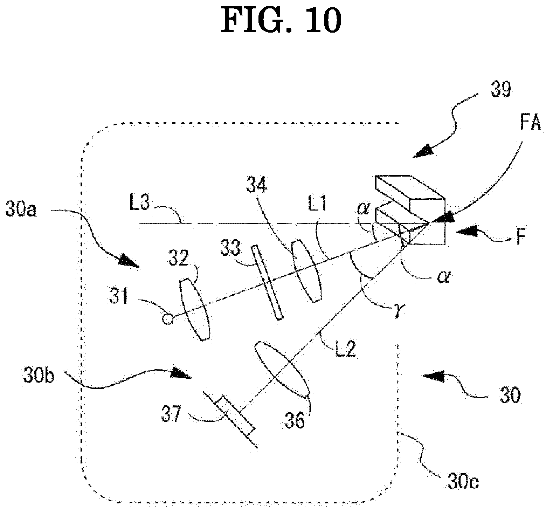

The optical measurement unit 30 will be described with reference to FIGs. 7 to 10. FIG. 10 is a schematic view illustrating a positional relationship between the light-projecting optical system 30a and the light-receiving optical system 30b which are optical systems included in the optical measurement unit 30.

For example, the optical measurement unit 30 is configured to include the light-projecting optical system 30a, the light-receiving optical system 30b, and the cover 30c. For example, the light-projecting optical system 30a and the light-receiving optical system 30b are used to acquire a shape of the rim Ri of the eyeglass frame F and a cross-sectional shape of the rim groove FA of the eyeglass frame F. For example, the cover 30c has an opening portion 38. For example, the opening portion 38 may have a transparent panel that covers the opening portion 38. For example, the light-projecting optical system 30a irradiates the rim groove FA of the eyeglass frame F with a measurement light beam emitted from a light source. The measurement light beam from the light-projecting optical system 30a is emitted outward from the inside of the holding unit 25 via the opening portion 38, and the rim groove FA is irradiated with the measurement light beam. For example, the light-receiving optical system 30b causes the detector 37 to receive the reflection light beam of the measurement light beam reflected by the rim groove FA of the eyeglass frame F. The reflection light beam of the measurement light beam reflected by the rim groove FA of the eyeglass frame F enters the inside from the outside of the holding unit 25 via the opening portion 38, and is guided toward the light-receiving optical system 30b.

### <Light-Projecting Optical System>

For example, the light-projecting optical system 30a includes the light source 31, a lens 32, a slit plate 33, and a lens 34. For example, a light-projecting optical axis of the light-projecting optical system 30a is defined as L1. For example, the measurement light beam emitted from the light source 31 is focused by the lens 32, and illuminates the slit plate 33. For example, the measurement light beam that illuminates the slit plate 33 serves as the measurement light beam limited to a thin slit shape by the slit plate 33, and is used in irradiating the rim groove FA of the eyeglass frame F via the lens 34. That is, the rim groove FA of the eyeglass frame F is irradiated with slit light. In this manner, the rim groove FA of the eyeglass frame F is illuminated in a form of being optically cut by the slit light.

### <Light-Receiving Optical System>

For example, the light-receiving optical system 30b includes a lens 36 and the detector 37 (for example, a light-receiving element). For example, the light-receiving optical axis of the light-receiving optical system 30b is defined as L2. For example, the lens 36 guides the reflection light beam of the rim groove FA (for example, scattered light of the rim groove FA or regularly reflected light of the rim groove FA) which is acquired by the reflection on the rim groove FA of the eyeglass frame F, to the detector 37. For example, the detector 37 has a light-receiving plane disposed at a position substantially conjugate with the rim groove FA of the eyeglass frame F.

### <Disposition of Light-Projecting Optical System and Light-Receiving Optical System>

For example, in the present embodiment, the light-projecting optical system 30a and the light-receiving optical system 30b are disposed, based on the Scheimpflug principle. For example, a cutting plane obtained in such a manner that the light-projecting optical system 30a optically cuts the rim groove FA of the eyeglass frame F by the slit light, a lens system (the rim groove FA of the eyeglass frame F and the lens 36) including the rim groove FA of the eyeglass frame F, and the light-receiving plane of the detector 37 are disposed in a relationship of the Scheimpflug.

### <Measurement Positional Relationship between Optical measurement Unit and Tracing Stylus Unit>

Next, a relationship between a measurement position measured by the optical measurement unit 30 and a measurement position measured by the tracing stylus unit 60 will be described with reference to FIG. 9.

For example, as illustrated in FIG. 9, in the present embodiment, the optical measurement unit 30 and the tracing stylus unit 60 are disposed to measure different measurement positions such as a first measurement position T measured by the optical measurement unit 30 and a second measurement position S measured by the tracing stylus unit 60. In addition, in the present embodiment, the tracing stylus unit 60 and the optical measurement unit 30 are disposed to measure a measurement position to which the first measurement position T and the second measurement position S are adjacent. In the present embodiment, the measurement positions of the first measurement position T and the second measurement position S are deviated by a deviation amount ΔD.

For example, in the present embodiment, the light-projecting optical axis L1 of the light-projecting optical system 30a and the imaging optical axis L2 of the light-receiving optical system 30b are disposed to be tilted in the Z-direction by a tilt angle α with respect to the measurement axis L3 of the tracing stylus 61.

In addition, for example, in the present embodiment, in order to enable the measurement to be performed at a position closer to the first measurement position T and the second measurement position S, the optical axis L1 of the light-projecting optical system 30a in the optical measurement unit 30 is disposed to be tilted from the tracing stylus 61 with respect to the measurement axis L3 facing the measurement position of the rim groove FA of the eyeglass frame F by a tilt angle β on the radius vector plane (on the XY-plane).

Furthermore, for example, in the present embodiment, in order to enable the detection of the cutting plane optically cut by the slit light of the light-projecting optical system 30a, the imaging optical axis L2 of the light-receiving optical system 30b in the optical measurement unit 30 is disposed to be tilted with respect to the optical axis L1 of the light-projecting optical system 30a by a tilt angle γ on the radius vector plane (on the XY-plane). That is, in the present embodiment, the imaging optical axis L2 of the light-receiving optical system 30b is disposed to be tilted downward in the Z-direction with respect to the XY-plane by the tilt angle α, and is disposed to be tilted with respect to the optical axis L1 of the light-projecting optical system 30a by the tilt angle γ on the XY-plane.

For example, the tracing stylus unit 60 and the optical measurement unit 30 are integrally supported by the support unit 70. Accordingly, when the tracing stylus unit 60 is moved, the optical measurement unit 30 is moved in response to the movement of the tracing stylus unit 60.

### <Control Unit>

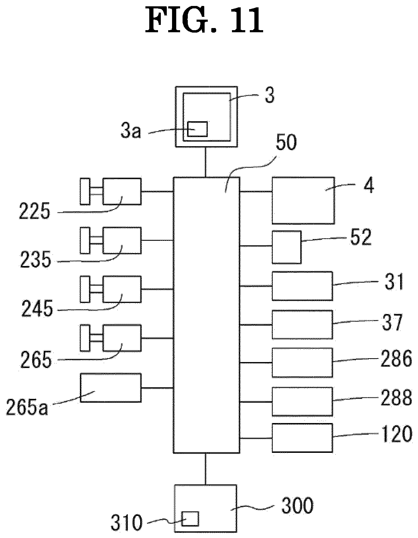

FIG. 11 is a view illustrating a control system of the eyeglass frame shape measurement apparatus 1. For example, the monitor 3, the switch unit 4, the light source 31, the detector 37, the encoder 265a, each motor, and a non-volatile memory 52 (hereinafter, a memory 52) are electrically connected to the control unit 50.

For example, the control unit 50 includes a CPU (processor), a RAM, and a ROM. For example, the control unit 50 controls each member in the eyeglass frame shape measurement apparatus 1. In addition, for example, the control unit 50 functions as a calculation unit that performs various calculation processes such as calculation of the cross-sectional shape of the rim groove FA, based on an output signal from each sensor. In addition, the control unit 50 has a function of the interference information acquisition means. For example, the RAM temporarily stores various information. For example, the ROM stores various programs for controlling the operation of the eyeglass frame shape measurement apparatus 1, or initial values. The control unit 50 may be configured to include a plurality of control units (that is, a plurality of processors).

For example, the memory 52 is a non-transitory storage medium that can hold stored contents even when power supply is cut off. For example, a hard disk drive, a flash ROM, or a USB memory can be used as the memory 52.

### <Operation of Apparatus>

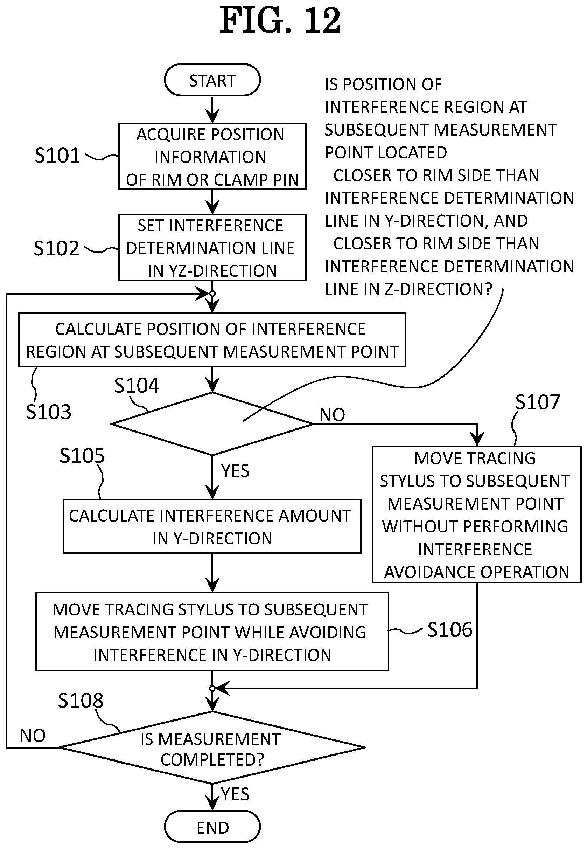

Next, an example of an operation of the apparatus in the present disclosure will be described with reference to a flowchart in FIG. 12. The flowchart in FIG. 12 is an example of a program executed by the control unit 50 in the eyeglass frame shape measurement apparatus 1. In the present embodiment, the rim Ri is measured from the right rim RIR, and subsequently, the left rim RIL is measured. However, as a matter of course, the left rim RIL may be measured first, and subsequently, the right rim RIR may be measured.

First, an operator causes the frame holding unit 10 to hold the eyeglass frame F. For example, the operator causes the frame holding unit 10 to hold the eyeglass frame F so that the right and left rims RIR and RIL of the eyeglass frame F face downward and the right and left temples FTL and FTR of the eyeglass frame F face upward. Thereafter, the operator operates the switch unit 4 to input a measurement start trigger signal to the control unit 50.

For example, the measurement may start by causing a sensor (not illustrated) to detect that the eyeglass frame F is held by the frame holding unit 10.

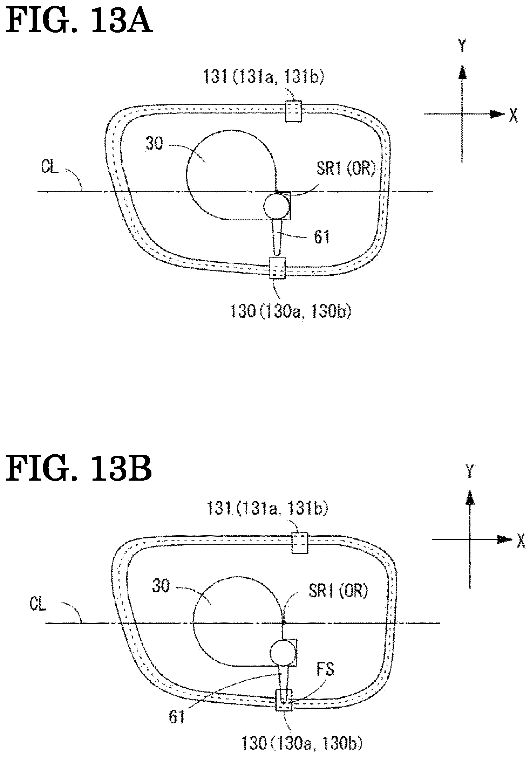

FIG. 13A is a view illustrating a state where the tip 61a of the tracing stylus 61 included in the holding unit 25 is located at an initial position SR1.

The initial position SR1 is a predetermined position where the holding unit 25 is disposed before the measurement starts. For example, the position of the initial position SR1 in the X-direction is a center position of the clamp pins 130a and 130b in the X-direction. For example, the position of the initial position SR1 in the Y-direction is the same as a position of the center line CL in the Y-direction with respect to the front slider 102 and the rear slider 103. For example, the position of the initial position SR1 in the Z-direction is a position where the tracing stylus 61 is located on the lower side of a lowermost end 130min in a movable range of the clamp pin 130b in the Z-direction, and is a lower end of the movable range of the Z-direction movement unit 220, for example. In the present embodiment, the position of the clamp pins 130a and 130b in the X-direction and the position of the center line CL in the Y-direction may be positions set in advance, and may be held in the memory 52. For example, at the initial position SR1, the tip 61a of the tracing stylus 61 faces a measurement start point FS side, and the tracing stylus shaft 62 is disposed to be located perpendicular to the rotation base 261 in the Z-direction. The initial position SR1 is set as a reference position OR for obtaining radius vector information in the XY-direction of the right rim RIR. In addition, the reference position in the Z-direction is an intermediate position between the clamp pin 130a and the clamp pin 130b (clamp pin 131a and the clamp pin 131b). The initial position SR1 may be a position different from the above-described position, depending on a positional relationship between the tracing stylus 61 and the optical unit 30.

For example, when the measurement start trigger signal is output, the control unit 50 controls the drive of the movement unit 210 and the rotation unit 260, and moves the holding unit 25 in the Y-direction from the initial position SR1 so that the tip 61a of the tracing stylus 61 is inserted into the groove portion of the rim Ri pinched between the clamp pins 130a and 130b. The holding unit 25 is moved from the initial position SR1 so that the portion of the rim groove FA into which the tip 61a of the tracing stylus 61 is inserted (and the position of the tip 61a of the tracing stylus 61) is set as the measurement start point FS.

FIG. 13B is a view illustrating a state where the holding unit 25 is moved so that the tip 61a of the tracing stylus 61 is located at the measurement start point FS. For example, the position of the measurement start point FS is a point included in the portion pinched between the clamp pins 130a and 130b.

An example of a method for moving the holding unit 25 from the initial position SR so that the tip 61a of the tracing stylus 61 is located at the measurement start point FS will be described.

At the measurement start point FS, the control unit 50 rotates the rotation base 261 of the rotation unit 260 so that the measurement axis L3 of the tracing stylus 61 has a predetermined angle δ with respect to the X-direction. For example, the predetermined angle δ is an angle suitable for at least one of the tracing stylus unit 60 and the optical measurement unit 30 to accurately measure the shape of the rim Ri. For example, the predetermined angle δ is a normal direction with respect to the X-direction in the XY-direction. In addition, the control unit 50 moves the Z-direction movement unit 220 so that the tip 61a of the tracing stylus 61 is located at a predetermined height of the measurement start point FS (position of a midpoint of the clamp pin 130a and the clamp pin 130b in the Z-direction). Next, the control unit 50 drives the X-direction movement unit 240 and the Y-direction movement unit 230, and inserts the tip 61a of the tracing stylus 61 into the rim groove FA. The tip 61a of the tracing stylus 61 comes into contact with the rim groove FA, and the holding unit 25 is further moved to the rim Ri side in that state. In this manner, the tracing stylus shaft 62 in a vertical state is tilted around the shaft S2. The tilt of the tracing stylus shaft 62 is detected from an output change of the encoder 288. Accordingly, the control unit 50 detects that the tip 61a of the tracing stylus 61 is in contact with the rim groove FA. At the measurement start point FS, the holding unit 25 is moved to the rim groove FA side to a position where the tracing stylus shaft 82 is tilted by a predetermined angle (for example, 5 degrees).

The position of the tip 61a of the tracing stylus 61 at this time is calculated, based on XYZ-position information of the holding unit 25 moved by the movement unit 210, detection information of the encoder 287 that detects a movement amount of the tracing stylus shaft 62 in the Z-direction, detection information of the encoder 288 that detects a tilt angle of the tracing stylus shaft 62, and detection information of the encoder 265a that detects a rotation angle of the rotation unit 260, and is stored in the memory 52.

The reason that the holding unit 25 is moved to a state where the tracing stylus shaft 62 is tilted is to enable the measurement in a direction separated from the rim groove FA when the measurement point is subsequently measured. In the present embodiment, the tracing stylus 61 is inserted into the rim groove FA. Thereafter, the tracing stylus 61 is tilted to the rim groove FA side around the shaft S2, and is brought into a state where the measurement pressure is applied by the spring 75 and the spring 76. Since the measurement pressure is generated, the tip 61a of the tracing stylus 61 can follow a change in the position of the rim groove FA until the tracing stylus shaft 62 is vertically located.

A configuration may be adopted so that whether or not the eyeglass frame F serving as a measurement target is a high curve frame can be selected in advance, when the measurement of the rim Ri starts. For example, a selection switch 3a which is an example of the selection means for selecting whether or not the eyeglass frame F serving as the measurement target is the high curve frame is displayed on a screen of the monitor 3 illustrated in FIG. 1. When the high curve frame is selected by the selection switch 3a, an interference avoidance measurement mode for avoiding the interference of the optical measurement unit 30 with respect to the interfered object is applied. When a frame other than the high curve frame (that is, a low curve frame) is selected by the selection switch 3a, a normal measurement mode is applied. Hereinafter, a measurement operation in the normal measurement mode and an operation in the interference avoidance measurement mode will be described in order.

### <Normal Measurement Mode>

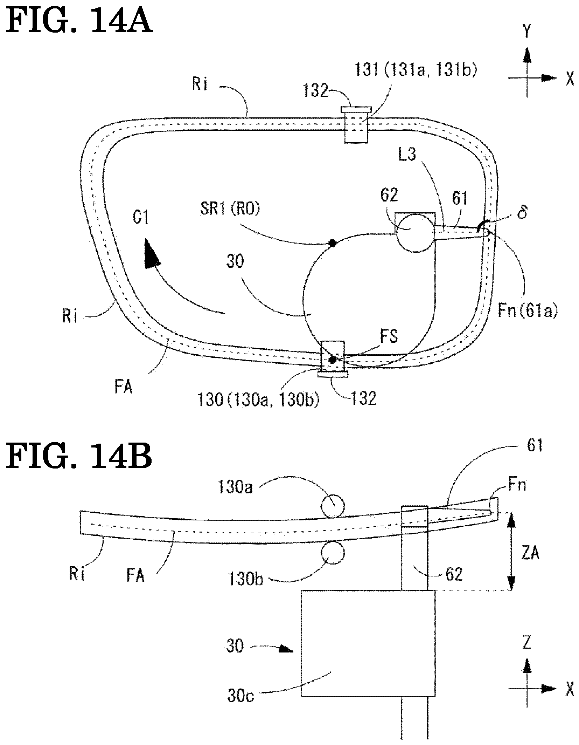

FIGs. 14A and 14B are schematic views illustrating a positional relationship among the clamp pins 130 and 131, the rim Ri, the tracing stylus 61, and the optical measurement unit 30 when a shape of the low curve frame is measured. FIG. 14A is a view when a state where the rim Ri of the eyeglass frame F is held by the clamp pins (130 and 131) in FIG. 2 is observed in the upward direction on the paper surface, and FIG. 14B is a view when the rim Ri is observed in a direction (front direction) of an arrow A2 in FIG. 2.

As illustrated in FIG. 14A, when the XY-plane is observed from above in a state where the tip 61a of the tracing stylus 61 measures a measurement point Fn slightly below the right side of the rim Ri, an observed result shows a state where the optical measurement unit 30 interferes with the clamp pin 130 and the rim Ri. However, as illustrated in FIG. 14B, an upper surface 30cA of the optical measurement unit 30 is located below a lower end of the clamp pin 130b in the Z-direction. Accordingly, the interference between the optical measurement unit 30 and the rim Ri and the clamp pin 130b does not usually occur. Therefore, in the normal measurement mode, no special control for avoiding the interference of the clamp pin 130b is performed.

An example of a rim shape data acquisition method in the normal measurement mode will be described. In the normal measurement mode, the control unit 50 causes the optical measurement unit 30 to acquire a cross-sectional shape of the rim groove FA. In addition, the control unit 50 causes the tracing stylus unit 60 to acquire three-dimensional position information of the entire periphery of the rim groove FA.

When the normal measurement mode starts, the control unit 50 turns on the light source 31 of the optical measurement unit 30. When the light source 31 is turned on, the rim groove FA of the eyeglass frame F is optically cut by the slit light. The reflection light beam from the rim groove FA of the eyeglass frame F optically cut by the slit light is directed to the light-receiving optical system 30b, and is received by the detector 37. The control unit 50 acquires the cross-sectional shape of the rim groove FA of the eyeglass frame F, based on the reflection light beam received by the detector 37. In the present embodiment, a cross-sectional image is acquired as the cross-sectional shape.

For example, with regard to the measurement performed by the tracing stylus unit 60, the control unit 50 drives the rotation unit 260 to rotate the tracing stylus shaft 62 and the tracing stylus 61 around the axis of the rotary shaft LO. In addition, the control unit 50 drives the movement unit 210 to adjust the position of the holding unit 25 in the XY-direction. The tracing stylus 61 moves in the X-direction, the Y-direction, and the Z-direction by following a change in the rim Ri (rim groove FA). In the present embodiment, the control unit 50 moves the tip 61a of the tracing stylus 61 along the rim Ri. In this case, the control unit 50 controls operations of the movement unit 210 and the rotation unit 260 to move the tracing stylus 61 so that the measurement axis L3 has a predetermined angle δ in the XY-direction with respect to an extending direction of the rim Ri. For example, the predetermined angle δ is a predetermined angle. For example, the predetermined angle δ is an angle suitable for at least one of the tracing stylus unit 60 and the optical measurement unit 30 to accurately measure the shape of the eyeglass frame F. For example, the predetermined angle δ is the normal direction with respect to the extending direction of the rim Ri in the XY-direction.

The position of the tip 61a of the tracing stylus 61 (that is, position information of the rim groove FA) during a trace is calculated, based on detection information of the position of the holding unit 25 in an XYZ-direction (detected by the control unit 50 from the drive amount of each motor), detection information of the encoder 265a that detects the rotation angle of the rotation unit 260, detection information of the encoder 287 that detects the movement amount of the support unit 70 in the Z-direction, and detection information of the encoder 288 that detects the tilt angle of the tracing stylus shaft 62.

The control unit 50 moves the holding unit 25 to move the optical measurement unit 30 (light-projecting optical system 30a and light-receiving optical system 30b) and the tracing stylus unit 60, and measures a contour of the rim Ri of the eyeglass frame F. In this manner, the cross-sectional shape of the rim groove FA of the eyeglass frame F and the position information of the rim Ri (the target lens shape and a peripheral length of the rim Ri in the present embodiment) are acquired. In the present embodiment, the light-projecting optical system 30a and the light-receiving optical system 30b are moved with respect to the rim Ri in a state of maintaining the relationship of the Scheimpflug. That is, the cross-sectional shape of the rim groove FA of the eyeglass frame F can be acquired by moving the optical measurement unit 30 to have a prescribed positional relationship with the rim groove FA of the eyeglass frame F.

For example, in the XY-direction, the control unit 50 calculates a radius vector angle (θn) from a reference position OR (initial position SR1) to the rim groove FA in contact with the tip 61a of the tracing stylus 61 and a radius vector length (rn) which is a distance to the rim groove FA from the reference position OR, based on the position information of the tip 61a of the tracing stylus 61.

The control unit 50 moves the holding unit 25 from the measurement start point FS so that the radius vector angle (θn) around the reference position OR is 0 to 360 degrees, and measures the shape of the entire periphery of the rim Ri. A point on the rim Ri with which the tip 61a of the tracing stylus 61 is in contact at the radius vector angle (θn) is defined as the measurement point Fn.

When the shape of the rim Ri is measured, the control unit 50 may predict the position of the rim Ri of the unmeasured portion, based on the information of the portion of the previously measured rim Ri, and may perform movement control of the holding unit 25 and rotation control of the rotation unit 260. An example of a method for predicting the position of the rim Ri of the unmeasured portion, based on the position information of the previously measured rim Ri will be described.

For example, at the radius vector angle (θn), when the tip 61a of the tracing stylus 61 is located at the measurement point Fn, a position of a subsequent measurement point Fₙ₊₁ is predicted to exist on a straight line passing through the measurement point Fn and a previously acquired measurement point Fₙ₋₁. In order to predict the position of the measurement point Fₙ₊₁, a plurality of the previously acquired measurement points may be used.

As a method for predicting the position of the rim Ri in the unmeasured portion, based on the position information of the previously measured rim Ri, a known method disclosed in JP-A-2011-122899 can be used. In this manner, the shape of the rim Ri can be accurately measured.

The optical measurement unit 30 and the tracing stylus unit 60 are integrally supported by the support unit 70. Accordingly, an irradiation position of the measurement light beam for the optical measurement unit 30 to irradiate the rim groove is changed in response to the movement of the tracing stylus unit 60. In the present embodiment, the rim groove FA is measured by the tracing stylus 61, and the cross-sectional shape of the groove of the rim is measured by the optical measurement unit 30 in parallel with each other. For example, the tracing stylus 61 is moved along the rim groove FA so that the cross-sectional image (cross-sectional shape) of the rim groove FA is acquired in order. That is, the position for acquiring the cross-sectional image of the rim Ri is moved in a circumferential direction of the rim Ri. The position for acquiring the cross-sectional image of the rim Ri is a value deviated by ΔD from the tip of the tracing stylus 61 (refer to FIG. 9), and is calculated, based on the position of the tip 61a of the tracing stylus 61. For example, the acquisition position of the acquired cross-sectional shape information of the groove is stored in the memory 52.

As a method for acquiring the cross-sectional image of the rim Ri by the optical measurement unit 30, for example, a method disclosed in International Publication No. WO2019/026416 can be used.

For example, in the present embodiment, the radius vector length (rn) at the radius vector angle (θn), the position information (xn, yn, and zn) (n=1, 2, 3,.., and N) of the measurement point Fn at the radius vector angle (θn), and the cross-sectional shape of the rim groove FA at the radius vector angle (θn) are acquired for each radius vector angle (θn) around the reference position OR over the entire periphery of the rim Ri. For example, in the present embodiment, the measurement point on the entire periphery of the rim Ri is 1,000 points, and the radius vector angle is changed every 0.36 degrees. In the present embodiment, the position information of the measurement point Fn is represented as three-dimensional Cartesian coordinates. In the position information of the measurement point Fn, the positions in the X-direction and the Y-direction may be represented as two-dimensional polar coordinates by the radius vector angle θn and the radius vector length rn, and the position in the Z-direction may be appropriately converted into (rn, zn, and θn) (n=1, 2, 3,.., N) represented as Z-coordinates.

For example, the control unit 50 causes the memory 52 to store the radius vector length (rn) at the radius vector angle (θn), three-dimensional target lens shape data (xn, yn, and zn) (n=1, 2, 3,.., N) of the rim groove FA at the radius vector angle (θn), and the cross-sectional shape of the rim groove FA at the radius vector angle (θn), for each radius vector angle (θn) acquired over the entire periphery of the rim Ri.

For example, when the cross-sectional image of the rim groove FA over the entire periphery of the rim Ri is completely acquired, the control unit 50 calls the cross-sectional image on the entire periphery of the rim Ri stored in the memory 52 and the position information of the rim groove FA on the entire periphery of the rim Ri, and performs a calculation process to acquire the three-dimensional shape of the rim Ri over the entire periphery of the rim Ri. For example, the control unit 50 causes the memory 52 to store the acquired three-dimensional shape on the entire periphery of the rim Ri. In the present embodiment, a configuration in which the three-dimensional cross-sectional image is acquired after the cross-sectional shape on the entire periphery of the rim Ri is completely acquired has been described as an example. However, the present embodiment is not limited thereto. A configuration may be adopted so that the calculation process may be performed at each acquisition position of the cross-sectional image of the rim groove FA, each time the cross-sectional image is acquired.

In the present embodiment, the optical axis L1 of the light-projecting optical system 30a and the imaging optical axis L2 of the light-receiving optical system 30b are disposed to be tilted downward by the tilt angle α in the Z-direction with respect to the XY-plane. In addition, for example, the optical axis L1 of the light-projecting optical system 30a in the optical measurement unit 30 is disposed to be tilted from the tracing stylus 61 with respect to the measurement axis L3 facing the measurement position of the rim groove FA of the eyeglass frame F by the tilt angle of β on the radius vector plane (on the XY-plane). Furthermore, for example, the light-projecting optical axis L1 of the light-projecting optical system 30a and the imaging optical axis L2 of the light-receiving optical system 30b are disposed to be tilted downward from the tracing stylus 61 with respect to the measurement axis L3 facing the measurement position of the rim groove FA of the eyeglass frame F by the tilt angle γ in the Z-direction. In a case of the above-described configuration, for example, the control unit 50 may correct the cross-sectional shape of the rim groove FA, based on at least one of the tilt angle α, the tilt angle β, and the tilt angle γ. As an example, the control unit 50 may correct the acquired cross-sectional shape of the rim groove FA of the eyeglass frame F by a trigonometric function using at least one of the tilt angle α, the tilt angle β, and the tilt angle γ. Furthermore, for example, the optical measurement unit 30 is held integrally with the tracing stylus shaft 62. Accordingly, the control unit 50 may correct the acquired cross-sectional shape of the rim groove FA of the eyeglass frame F, based on the tilt angle of the tracing stylus shaft 62 which is acquired by the encoder 288.

In this way, since the cross-sectional shape of the rim groove FA is corrected, based on the tilt angle, it is possible to acquire the cross-sectional shape in which a distortion of the cross-sectional shape affected by the tilt angle is corrected. Therefore, the cross-sectional shape of the rim groove FA can be accurately acquired.

For example, when the tip 61a of the tracing stylus 61 is moved along the rim groove FA, the position of the tracing stylus 61 may be moved while being adjusted, based on the measurement result (for example, the cross-sectional image) acquired by the optical measurement unit 30. That is, the cross-sectional shape of the rim groove FA is measured by the optical measurement unit 30 before the position of the rim groove FA is measured by the tracing stylus unit 60. Accordingly, the control unit 50 can control the movement of the holding unit 25 so that the tracing stylus 61 is not fallen out from the rim groove FA, based on the cross-sectional shape of the rim groove FA which is acquired by the optical measurement unit 30. In this case, for example, the control unit 50 may perform image processing on the cross-sectional image acquired by the optical measurement unit 30 to detect a bottom of the rim groove FA, and may control the movement of the holding unit 25 so that the tip 61a of the tracing stylus 61 is inserted into a position of the bottom of the rim groove, based on the position of the detected bottom of the rim groove FA.

For example, when one rim Ri (right rim RIR) is completely measured, the control unit 50 controls the drive of the X-direction movement unit 240, and moves the holding unit 25 to the initial position for measuring the other rim. The other rim is measured as in the above-described measurement control. The measurement result of the right rim RIR and the left rim RIL are stored in the memory 52.

The normal measurement mode is performed as described above so that the control unit 50 acquires the three-dimensional shape of the rim Ri.

### <Interference Avoidance Measurement Mode>

A case where the eyeglass frame F serving as a measurement target is selected as the high curve frame to apply an interference avoidance measurement mode will be described. Operations of the shape measurement of the rim Ri by the tracing stylus unit 60 and the measurement of the cross-sectional shape by the optical measurement unit 30 are basically the same as those in the above-described normal measurement mode. Accordingly, herein, an interference avoidance operation of the optical measurement unit 30 with reference to the interfered object will be mainly described.

When the high curve frame is selected, the control unit 50 considers a possibility that interference between the optical measurement unit 30 and the interfered object (clamp pin 130b or rim Ri) may occur during the measurement operation, and acquires the three-dimensional shape of the rim Ri in the interference avoidance measurement mode where the target lens shape acquisition unit 20 is caused to perform an interference avoidance operation.

For example, in the interference avoidance measurement mode, as in the normal measurement mode, when the shape of the rim Ri is measured, the control unit 50 predicts a position of the rim Ri in the unmeasured portion, based on the information of previously measured portion of the rim Ri. For example, for each radius vector angle (θn) around the reference position, the control unit 50 predicts a position of the measurement point Fₙ₊₁ on the rim Ri with which the tip 61a of the tracing stylus 61 comes into contact, at the radius vector angle (θₙ₊₁) where the subsequent measurement is performed at the radius vector angle (θn), based on the information of the previously measured portion on the rim Ri. As a method for predicting the position of the rim Ri in the unmeasured portion, based on the position information of the previously measured rim Ri, a well-known method disclosed in JP-A-2011-122899 can be used as in the normal measurement mode.

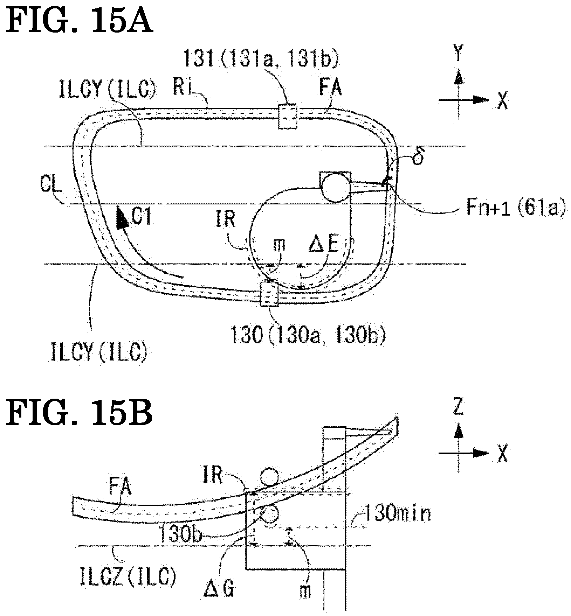

FIGs. 15A and 15B are views for describing a typical example in which the optical measurement unit 30 and the clamp pin 130b interfere with each other, and is a schematic view illustrating a positional relationship among the rim Ri, the clamp pins 130 and 131, and the optical measurement unit 30. FIG. 15A is a view when the measurement plane is observed in the upward direction of the paper surface, and FIG. 15B is a view when the measurement plane is observed in a direction parallel to the Y-axis from the clamp pin 130 side.

An arrow C1 indicates a measurement progress direction (clockwise direction in FIG. 15A), that is, a movement direction of the tracing stylus 61 when the shape of the rim Ri is measured. In the present embodiment, the optical measurement unit 30 is installed integrally with the tracing stylus shaft 62 in the lower portion of the tracing stylus 61, and the optical measurement unit 30 is moved integrally with the tracing stylus unit 60. The optical measurement unit 30 is larger in the XY-direction than the tracing stylus unit 60. Therefore, in a case where the shape of the high curve frame is measured, when the tracing stylus unit 60 and the optical measurement unit 30 measure a certain measurement point Fn on the rim Ri, there is a possibility that the optical measurement unit 30 may interfere with the rim Ri or the clamp pin 130b in the portion different from the measurement point Fn.

In the interference avoidance measurement mode, shape data of the rim Ri is acquired while avoiding the interference between the optical measurement unit 30 and the rim Ri or the clamp pin 130b which is the interfered object.

An example of an interference avoidance control program executed by the control unit 50 in the interference avoidance measurement mode will be described. In the present disclosure, a case where the optical measurement unit 30 interferes with the clamp pins 130b and 131b, a case where the optical measurement unit 30 interferes with the unmeasured portion of the rim Ri, and a case where the optical measurement unit 30 interferes with the previously measured portion of the rim Ri will be separately described.

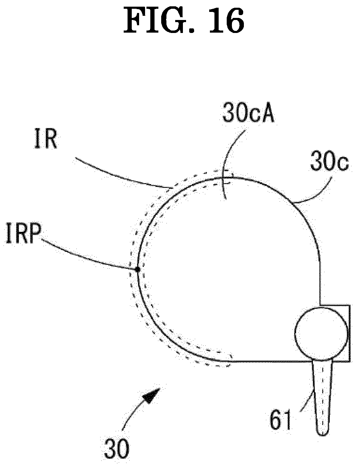

For example, at the measurement point Fn, the control unit 50 assumes that the measurement axis L3 facing the measurement point Fₙ₊₁ on the rim groove FA from the tracing stylus 61 is inserted into the rim groove FA at the predetermined angle δ (same as that in the normal measurement mode), and calculates a position of an interference region IR (refer to FIG. 16) (to be described later) which is an example of the interference site.

When the position of the measurement point Fₙ₊₁ at the radius vector angle (θₙ₊₁) is predicted in the interference avoidance measurement mode, the disposition of the holding unit 25 at the measurement point Fₙ₊₁ is calculated, based on the predetermined angle δ. The optical measurement unit 30 and the tracing stylus unit 60 are integrally held in the holding unit 25, and the position of the optical measurement unit 30 in the holding unit 25 is calculated by various detectors (encoder 265a, 287, and 288). Then, the disposition of the holding unit 25 in the XY-direction at the measurement point Fₙ₊₁ is detected, based on the control information of the movement unit 210. In this manner, the disposition of the optical measurement unit 30 at the measurement point Fₙ₊₁ in the XYZ-direction is calculated.

FIG. 16 is a view illustrating the interference region IR which is an example of the interference site of the optical measurement unit 30 in the present embodiment. In the present embodiment, on the assumption that the interference region IR of the optical measurement unit 30 interferes with the clamp pins (130 and 131) and the rim Ri, the interference avoidance operation is performed. The interference region IR is a predetermined region on the cover 30c of the optical measurement unit 30, which has a possibility that the region may interfere with the rim Ri. For example, in an example in FIG. 16, the interference region IR is a region of a left half corner portion of the upper surface 30cA having a circular shape on the cover 30c. A coordinate position of the region where the interference region IR is located on the optical measurement unit 30 is changed depending on the shape of the optical measurement unit 30. The interference region IR is the predetermined region on the optical measurement unit 30. Accordingly, the disposition of the interference region IR at the measurement point Fn (XYZ-position based on the reference position OR) is calculated, based on the disposition of the optical measurement unit 30.

In the present embodiment, the interference region IR is provided to determine the interference avoidance operation. However, the interference region IR may be the interference point IRP on the optical measurement unit 30. For example, the interference point IRP is a point on the optical measurement unit 30, which is set, based on an interference state obtained by measuring a plurality of frames. For example, the interference point IRP is determined as a point that avoids the interference of the whole interference region IR, when the interference of one interference point IRP is avoided with respect to the clamp pins 130b and 131b and the rim Ri. In the interference avoidance measurement mode, the control unit 50 determines whether to perform interference avoidance control, based on the disposition of the interference region IR at the measurement point Fₙ₊₁.

### <Case of Avoiding Interference with Clamp Pin>

First, a case where the control unit 50 avoids the interference with the clamp pin 130b will be described.

When the optical measurement unit 30 and the clamp pin 130b interfere with each other, the position of the optical measurement unit 30 and the position of the clamp pin 130b overlap each other in the XYZ-direction. On the other hand, when at least one of the position of the optical measurement unit 30 and the position of the clamp pin 130b is different in the X-direction, the Y-direction, and the Z-direction, the optical measurement unit 30 and the clamp pin 130b do not interfere with each other.

For example, first, the interference information acquisition means (control unit 50) acquires the interference information (shape information of the clamp pins 130b and 131b and the previously measured rim Ri) of the interfered object (Step S101). In order to determine whether to perform the interference avoidance control, the control unit 50 provides an interference determination line ILC (ILCY and ILCZ) for avoiding the interference with the clamp pin 130b (refer to FIGs. 15A and 15B) (Step S102). In a typical example, the interference determination line ILC is a reference line set at a predetermined determination distance m in a direction separated from the clamp pin 130b, based on the disposition position in the XYZ-direction of the clamp pin 130b which is acquired by the interference information acquisition means (control unit 50). The interference determination line ILC is set in the Y-direction and the Z-direction in the present embodiment.

For example, a first interference determination line ILCY in the Y-direction is set at a position separated by a determination distance m from the tip position 133 of the clamp pin 130b in the Y-direction facing the center line CL. The tip position 133 of the clamp pin 130b in the Y-direction is acquired, based on the detection information of the detector 120 that detects an open/closed state of the sliders 102 and 103 in the Y-direction, the length HBL of the clamp pin 130b, and the length SSBL of the support shaft 132b. When the detector 120 is not used, the tip position 133 of the clamp pin 130b in the Y-direction is approximately acquired, based on the position in the Y-direction of the tip 61a of the tracing stylus 61 at the measurement start point FS, the length HBL of the clamp pin 130b, and a thinnest distance of the rim Ri when the measurable rim Ri is held by the clamp pin 130. Similarly, a second interference determination line ILCY in the Y-direction is also set on the clamp pin 131 side. The interference determination line ILCY in the Y-direction may be set, based on a portion other than the tip position 133 of the clamp pin 130b, such as a root of the clamp pin 130b and the rim receiver 132b.

In addition, the position of the clamp pin 130b in the Y-direction may be acquired in such a manner that the control unit 50 controls the movement unit 210 and the rotation unit 260 in a state where the rim Ri is held by the frame holding unit 10 to bring the tip 61a of the tracing stylus 61 into contact with the tip position 133 of the clamp pin 130b. That is, the control unit 50 can calculate the tip position 133 of the clamp pin 130b by calculating the coordinate position of the tip 61a in the Y-direction when the tip 61a of the tracing stylus 61 is brought into contact with the tip position 133, based on control data of the movement unit 210, control data of the rotation unit 260, tilt data of the tracing stylus shaft 62, and movement data of the tracing stylus shaft 62 in the Z-direction with respect to the rotation unit 260. In addition, the tip position 133 of the clamp pin which is an example of the rim holding member may be provided on the clamp pin 131b side. The reason is that the clamp pin 130b and the clamp pin 131b are symmetrically located around the center line CL in the Y-direction. Furthermore, in obtaining the tip position 133 of the clamp pin 130b in the Y-direction, the tip 61a of the tracing stylus 61 may not be brought into contact with the clamp pin 130b or 131b. Alternatively, the tip position 133 of the clamp pin 130b in the Y-direction may be acquired by bringing the tip 61a of the tracing stylus 61 into contact with a member (for example, the rim receiver 313 or the surface of the slider 102 or 103 in the Y-direction) having the known positional relationship with the clamp pin 130b or 131b.

For example, the interference determination line ILCZ in the Z-direction is set at a position separated in the downward direction with respect to the Z-axis by the determination distance m from the lowermost end 130min in the movable range in the Z-direction of the clamp pin 130b. The lowermost end 130min is called and acquired from the memory 52 by the control unit 50. The determination distance m is a preset distance for avoiding the interference between the interference region IR and the clamp pin 130b, and is 6 mm, for example. In addition, the interference determination line ILCZ in the Z-direction may be set, based on a movable center of the clamp pin 130. As a matter of course, the determination distance m may have different values in the Y-direction and the Z-direction.

For example, the control unit 50 predicts the position of the subsequent measurement point Fₙ₊₁ for each measurement point Fn, and calculates the position of the interference region IR at the measurement point Fₙ₊₁, based on the predicted position information of the measurement point Fₙ₊₁ (Step S103). The position of the interference region IR at the measurement point Fₙ₊₁ is calculated so that the position exists closer to the clamp pin (130b and 131b) side than the interference determination line ILCY in the Y-direction, and the control unit 50 determines to perform the interference avoidance control, when the position exists closer to the clamp pin (130b and 131b) side than the interference determination line ILCZ in the Z-direction (Step S104). The control unit 50 moves the tip 61a of the tracing stylus 61 from the measurement point Fn to the measurement point Fₙ₊₁, and simultaneously controls the operations of the movement unit 210 and the rotation unit 260 to perform the avoidance operation.

On the other hand, the control unit 50 determines not to perform the interference avoidance control, when the interference region IR is located at a position farther separated from the clamp pin (130b and 131b) side than at least one of the interference line ILCY in the Y-direction and the interference determination line ILCZ in the Z-direction (Step S107). An example in which the interference determination lines are provided in the Y-direction and the Z-direction has been described above. However, the control unit 50 may provide the interference determination line ILCX in the X-direction. For example, the position of the interference determination line ILCX in the X-direction is set in a direction separated from the clamp pin by the determination distance m from both end positions in the X-direction of the clamp pin 130b. Both end positions in the X-direction of the clamp pin 130b are acquired, based on the disposition information of the clamp pin 130b which is stored in the memory 52. When the interference determination line in the X-direction is provided, for example, when the control unit 50 predicts that the position of the optical measurement unit 30 exists closer to the rim Ri side than the interference determination line ILC in any one of the X-direction, the Y-direction, and the Z-direction, the control unit 50 determines to perform the interference avoidance control.

In this way, since a plurality of the interference determination lines are used, it is possible to reduce a frequency of performing unnecessary interference avoidance operations, and it is possible to accurately acquire the three-dimensional shape of the rim Ri.

In an example in FIGs. 15A and 15B, the tracing stylus 61 measures the position of the measurement point Fₙ₊₁. In FIGs. 15A and 15B, in the Y-direction, the interference region IR exists closer to the rim Ri side than the interference determination line ILCY in the Y-direction, and in the Z-direction, the interference region IR exists closer to the rim side than the interference determination line ILCZ in the Z-direction. Therefore, the control unit 50 determines to perform the interference avoidance control.

A configuration may be adopted so that one or more interference determination lines ILC in the XYZ-direction are used to determine whether or not to perform the interference avoidance operation. For example, as the interference determination line ILC, a configuration of using only the interference determination line ILCY in the Y-direction may be adopted.

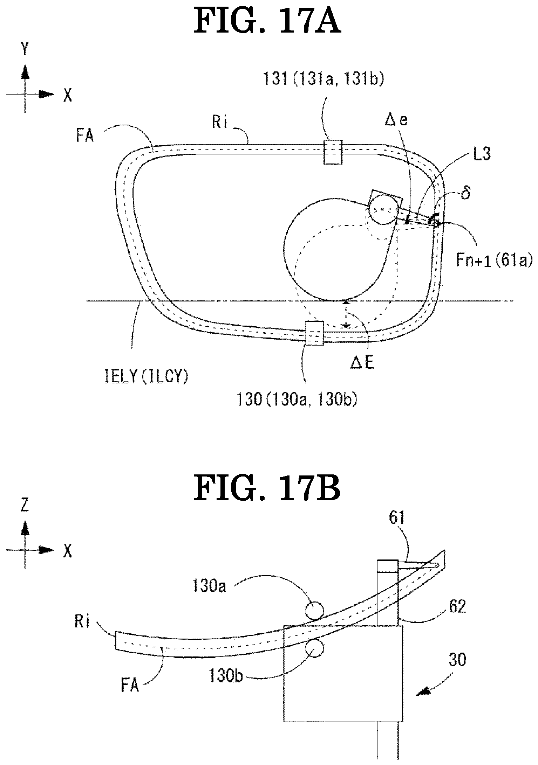

When the control unit 50 determines to perform the interference avoidance control on the clamp pin 130b, the control unit 50 controls the drive of the movement unit 210 and the rotation unit 260 to avoid the interference between the holding unit 25 and the rim Ri. An operation for avoiding the interference will be described with reference to FIGs. 17A and 17B. FIGs. 17A and 17B are views for describing a case where the interference is avoided by moving the optical measurement unit 30 in the Y-direction. FIG. 17A is a view when the measurement plane is observed in the upward direction of the paper surface, and FIG. 17B is a view when the measurement plane is observed in the direction parallel to the Y-axis from the clamp pin 130 side.

When the position of the optical measurement unit 30 and the positions of the clamp pin 130b and the rim Ri are different from each other in at least one of the X-direction, the Y-direction, and the Z-direction, the interference does not occur. Therefore, the interference can be avoided by moving the position of the interference region IR in at least one direction of the X-direction, the Y-direction, and the Z-direction.

For example, the control unit 50 moves the interference region IR in the Y-direction to avoid the interference between the interference region IR and the clamp pin 130b. First, the control unit 50 calculates the Y-position (coordinate position) of the interference region IR at the measurement point Fₙ₊₁, when the tip 61a of the tracing stylus 61 is moved from the measurement point Fn to the measurement point Fₙ₊₁ of the unmeasured portion. Next, the control unit 50 calculates an interference amount ΔE which is a distance at which the calculated Y-position of the interference region IR exceeds the interference determination line ILCY in the Y-direction (Step S105). Then, the control unit 50 moves the tip 61a of the tracing stylus 61 from the measurement point Fn to the measurement point Fₙ₊₁, and simultaneously controls the operation of the movement unit 210 and the rotation unit 260 so that the interference region IR is located at a position moved in the Y-direction by the interference amount ΔE (Step S106). In this manner, it is possible to avoid the interference between the interference region IR and the clamp pin 130b. The interference avoidance control is similarly performed at the measurement point after the measurement point Fₙ₊₁ until the interference amount ΔE is eliminated.

The tracing stylus unit 60 is held integrally with the optical measurement unit 30. Accordingly, when the avoidance operation is performed, an angle of the measurement axis L3 in the XY-direction at the measurement point Fₙ₊₁ with respect to the rim Ri is tilted with respect to an original angle δ by a change angle Δe. When the interference amount ΔE is eliminated at the measurement point after the measurement point Fₙ₊₁, the tracing stylus unit 60 and the optical measurement unit 30 are integrally moved to have the original angle δ. However, when the change angle Δe for returning to the original angle δ is large, there is a possibility that measurement accuracy may be affected. In that case, the control may be performed so that the angle gradually returns to the original angle δ at every measurement point. For example, the angle is gradually changed every 0.5 degrees.

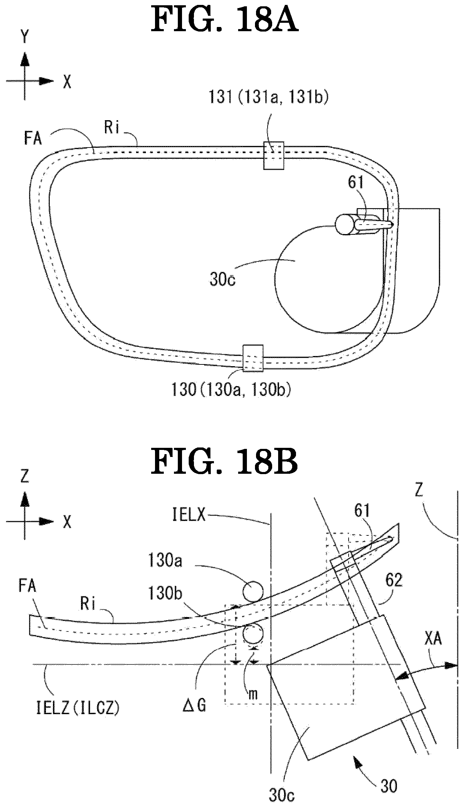

In addition, for example, as the interference avoidance control, the control unit 50 may be configured to avoid the interference by moving the interference region IR in the Z-direction. FIGs. 18A and 18B is a view illustrating a case where the interference is avoided by moving the optical measurement unit 30 in the Z-direction. FIG. 18A is a view when the measurement plane is observed in the upward direction of the paper surface, and FIG. 18B is a view when the measurement plane is observed in the direction parallel to the Y-axis from the clamp pin 130 side.

For example, as in the previous example, the control unit 70 calculates the Z-position of the interference region IR at the measurement point Fₙ₊₁, and thereafter, calculates an interference amount ΔG which is a distance at which the calculated Z-position of the interference region IR exceeds the interference determination line ILCZ in the Z-direction. In addition, in the same manner as that in the interference determination line ILCZ in the Z-direction, as illustrated in FIGs. 18A and 18B, the control unit 70 sets the interference determination line ILCX in the X-direction with respect to the right end of the clamp pin 130b. Then, the control unit 70 calculates a tilt angle XA of the tracing stylus shaft 62 with respect to the Z-direction so that the interference region IR located closer to the clamp pin 130b side than the interference determination line ILCX is located at a position moved in the Z-direction by the interference amount ΔG. Thereafter, the control unit 70 moves the holding unit 25 in the XY-direction so that the tracing stylus shaft 62 with respect to the Z-direction is tilted at the tilt angle XA. In this manner, it is possible to avoid the interference of the optical measurement unit 30 with respect to the clamp pin 130b.

When the interference determination line ILCX in the X-direction is set, although it may be disadvantageous to some extent, only the interference determination line ILCX may be used. That is, in FIGs. 18A and 18B, the control unit 70 calculates the tilt angle XA of the tracing stylus shaft 62 so that the interference region IR is not closer to the clamp pin 130b from the interference determination line ILCX, and moves the holding unit 25 in the XY-direction so that the tracing stylus shaft 62 is tilted at the tilt angle XA. In this manner, it is possible to avoid the interference of the optical measurement unit 30 with respect to the clamp pin 130b.

The interference avoidance with respect to the clamp pin 130b has been described above. The interference avoidance with respect to the clamp pin 131b can be similarly performed.

### <Case of Avoiding Interference with Unmeasured Portion of Rim>

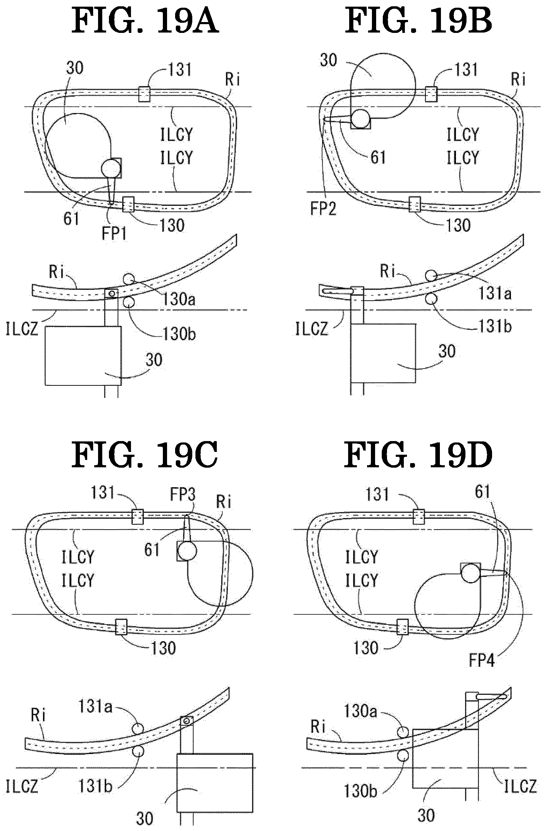

FIGs. 19A to 19D are views for describing a case where the interference avoidance of the optical measurement unit 30 is performed on the unmeasured portion of the rim Ri. In FIGs. 19A and 19D, the upper half is a view when the measurement plane is observed in the upward direction of the paper surface, and the lower half is a view when the measurement plane is observed in the direction parallel to the Y-axis from the clamp pin 130 side. In FIGs. 19B and 19C, the upper half is a view when the measurement plane is observed in the upward direction of the paper surface, and the lower half is a view when the measurement plane is observed in the direction parallel to the Y-axis from the clamp pin 131 side.

Even when the interference with the unmeasured portion of the rim is avoided, in order to determine whether to perform the interference avoidance control, the first and second interference determination lines ILCY in the Y-direction illustrated in FIGs. 17A and 17B and the interference determination line ILCZ in the Z-direction are used. A measurement progress direction of the tracing stylus 61 is a clockwise direction, which is an example of a case where the optical measurement unit 30 performs the measurement prior to the tracing stylus 61.

For example, as illustrated in FIGs. 19A and 19B, when the tracing stylus 61 is in a state of measuring measurement points FP1 and FP2 on the left side (nasal side) of the clamp pin 130b, the optical measurement unit 30 interferes with the rim Ri in the XY-direction. However, the optical measurement unit 30 (interference region IR) is located below the interference determination line ILCZ in the Z-direction. Accordingly, the interference does not occur, and the interference avoidance control is not performed.

In addition, as illustrated in FIG. 19C, when the tracing stylus 61 is in a state of measuring a measurement point FP3 on the right side (ear side) of the clamp pin 131b, the optical measurement unit 30 (interference region IR) is located above the interference determination line ILCZ in the Z-direction. Therefore, the avoidance control operation is performed not to be closer to the clamp pin 131b side from the second interference determination line ILCY in the Y-direction. However, the position of the rim Ri in the Z-direction becomes higher toward the ear side (ear side of a wearer in a wearing state). Accordingly, the optical measurement unit 30 does not usually interfere with the rim Ri even when the interference avoidance control is not performed.

On the other hand, as illustrated in FIG. 19D, when the tracing stylus 61 is in a state of measuring a measurement point FP4 of the rim Ri extending substantially parallel to the Y-direction on the right side (ear side) of the clamp pins 130b and 131b, the optical measurement unit 30 (interference region IR) is located above the interference determination line ILCZ in the Z-direction. Therefore, as in FIGs. 17A and 17B in the previous example, the avoidance control operation is performed so that the optical measurement unit 30 is not closer to the clamp pin 130b side from the first interference determination line ILCY in the Y-direction. In this case, as in FIGs. 18A and 18B, the control unit 70 may move the holding unit 25 in the XY-direction so that the tracing stylus shaft 62 is tilted to have the tilt angle XA. In this manner, the interference may be avoided in at least one of the Z-direction and the X-direction. In this manner, the interference with the unmeasured portion of the rim is avoided.

In the above description, the interference determination line ILCY in the Y-direction and the interference determination line ILCZ in the Z-direction for avoiding the interference with the clamp pins (130b and 131b) are shared. However, separately therefrom, another interference determination line for avoiding the interference with the unmeasured portion of the rim may be set. For example, position information of an end surface of the rim Ri in the Y-direction can be known, based on the measurement result of the cross-sectional shape of the rim groove at the measurement point to some extent from the measurement start point FS. Accordingly, the interference determination line in the Y-direction is set, based on the position information. In addition, position information of a lower end surface of the rim Ri in the Z-direction can be known, based on the measurement result of the cross-sectional shape of the rim groove. Accordingly, the interference determination line in the Y-direction is set, based on the position information. In this case, the interference determination line can be set at a position closer to the rim Ri side from the interference determination line for avoiding the interference with the clamp pins (130b and 131b). Accordingly, the amount of interference avoidance can be reduced, and the measurement can be more accurately performed.

An example has been described above as follows. The control unit 50 sets the first interference determination line ILCY in the Y-direction and the interference determination line ILCZ in the Z-direction, based on the position of the clamp pin 130b, and moves the interfering object (interference site) so that the interfering object (for example, the optical measurement unit 30) has the prescribed distance or longer from the lines. However, the operation for avoiding the interference is not limited thereto. For example, based on the position information of the interfered object (measured results of the rim holding member and the rim) acquired by the interference information acquisition means (control unit 50), the avoidance region for avoiding the interference with the interfered object may be set, and the changing means (movement unit 210 and rotation unit 260) may be controlled so that the interfering object (interference site) moves to the avoidance region.

### <Case of Avoiding Interference with Previously Measured Portion of Rim>

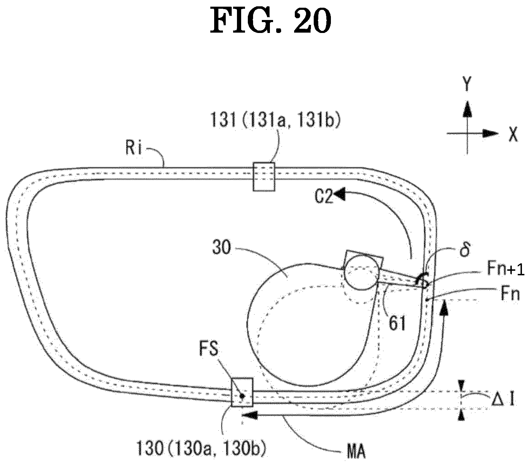

Next, an example of avoiding the interference with the rim Ri by using a previously acquired measurement result of the rim Ri will be described with reference to FIG. 20. When the measured result of the rim Ri is used for the interference avoidance, the tracing stylus 61 is used prior to the optical measurement unit 30. In an example in FIG. 20, a measurement progress direction C2 is a counterclockwise direction.

For example, when the control unit 50 moves the tip 61a of the tracing stylus 61 from the measurement point Fn to the measurement point Fₙ₊₁, the control unit 50 performs the interference avoidance control, based on the position information of the previously measured portion of the rim Ri, and avoids the interference by controlling the movement in the XY-direction of the holding unit 25 and rotation movement of the rotation unit 260. For example, when the control unit 50 moves the tracing stylus 61 to measure the measurement point Fₙ₊₁ which is the subsequent unmeasured point from the measurement point Fn, based on the previously acquired measurement result, the control unit 50 calculates the XYZ-position (coordinate position) of the interference region IR (cover 30c of the optical measurement unit 30 may be used) at the measurement point Fₙ₊₁. Next, the control unit 50 determines whether or not the interference occurs by comparing the calculated XYZ-position of the interference region IR and the XYZ-position (coordinate position) of a previously measured region MA of the rim Ri with each other. When the control unit 50 determines that the interference occurs, the control unit 50 performs the interference avoidance control. For example, when the interference is avoided in the Y-direction, the control unit 50 calculates the interference amount ΔI in the Y-direction of the interference region IR. Then, the control unit 50 controls the operations of the movement unit 210 and the rotation unit 260 so that the interference region IR is moved in the Y-direction inside the rim Ri by the amount obtained by adding a margin amount ΔIA to the interference amount ΔI.

The XYZ-position of the previously measured region MA of the rim Ri may be calculated as the XY-position inside the rim Ri and the Z-position on the lower side in the Z-direction of the rim Ri, based on the measurement result obtained by the tracing stylus 61 and the cross-sectional shape of the rim groove which is obtained by the optical measurement unit 30. In this manner, it is possible to avoid the interference with the previously measured region MA. The interference avoidance control is similarly performed at the measurement point after the measurement point Fₙ₊₁ until the interference amount ΔI is eliminated.

An example of avoiding the interference in the Y-direction has been described above. However, control for avoiding the interference in the X-direction or the Z-direction may be performed in the same manner. When the interference is avoided in the Z-direction, as illustrated in FIGs. 18A and 18B, the interference can be avoided by tilting the tracing stylus shaft 62.

It is advantageous that the avoidance control using the previously acquired measurement result of the rim Ri is applied when a height distance ZA between the tracing stylus 61 and the optical measurement unit 30 in the Z-direction is not long. For example, in a case of a configuration in the tracing stylus 61 and the optical measurement unit 30 in the Z-direction have substantially the same height, the interference cannot be avoided in the Z-direction. Therefore, the interference can be avoided by using the previously acquired measurement result of the rim Ri and moving the optical measurement unit 30 in the Y-direction.

### <Detection of Interference Occurrence>

According to the above-described control, the measurement is performed by avoiding the interference between the interfered object and the optical measurement unit 30. However, in some cases, the interference may not always be avoided depending on the shape of the rim Ri. Hereinafter, for example, an example will be described in which the tracing stylus 61 is not fallen out from the rim groove FA and the measurement is completed while the interference slightly occurs between the interfered object and the optical measurement unit 30.

For example, when the three-dimensional shape data for the entire periphery of the rim Ri is completely measured, the control unit 50 subsequently determines (detects) whether or not the optical measurement unit 30 (interference region IR) and the interfered object (clamp pins 130b and 131b and rim Ri) interfere with each other during the measurement operation, based on the measurement result of the rim Ri.

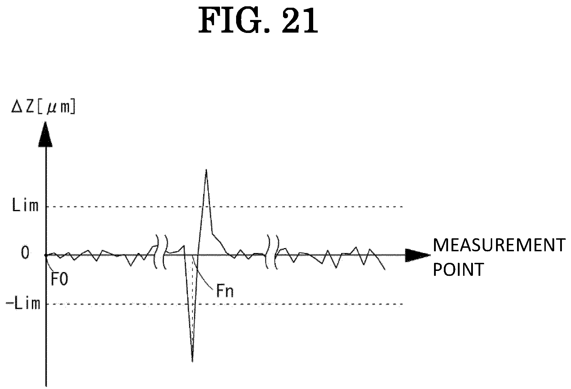

A method for detecting whether the optical measurement unit 30 and the interfered object interfere with each other during the measurement operation will be described. FIG. 21 is a graph illustrating a result obtained by differentiating the measurement result in the Z-direction out of the measurement results of the rim Ri which are obtained by the tracing stylus 61. When the measurement is completed without the interference occurrence, a differential value of the measurement result in the Z-direction of the rim is usually gently changed. However, then the interference occurs during the measurement, the differential value of the measurement result in the Z-direction is abruptly changed. FIG. 21 illustrates an example in which the interference occurs at the measurement point Fn, thereafter, the interference no longer occurs, and a normal measurement result is obtained, and the measurement is continued. When the tracing stylus 61 is fallen out from the rim groove, a measurement value of a radius vector length including a measurement value in the Z-direction is also abruptly changed, and becomes an abnormal value. Therefore, whether or not the tracing stylus 61 is fallen out from the rim groove is easily detected. In this case, the measurement is stopped.

An output signal of the encoder 287 that detects the movement amount of the tracing stylus shaft 62 in the Z-direction may be used to detect whether or not the interference occurs between the optical measurement unit and the interfered object during the measurement of the rim.

In FIG. 21, for example, when the differential value of the measurement result in the Z-direction exceeds a predetermined threshold value Lim, the control unit 50 specifies the measurement point Fn in this case as a measurement point where the interference with the interfered object occurs. In FIG. 21, the differential value exceeds the threshold value Lim on a plus side after the measurement point Fn. In this case, the interference no longer occurs. FIG. 21 illustrates the measurement point returning to the normal measurement again after the tracing stylus 61 follows the center of the rim groove.

The interference determination method of using the measurement result in the Z-direction or the detection information of the encoder 287 is an example of the determination means, and the example is not limited to the method. For example, the position information of the rim groove FA is acquired by analyzing the cross-sectional image acquired by the optical measurement unit 30. The interference may be determined, based on a transition of the position of the rim groove FA.

### <Re-measurement by Detecting Interference Occurrence>

When the control unit 50 determines that the optical measurement unit 30 and the interfered object interfere with each other, the control unit 50 performs re-measurement while performing the interference avoidance control. Hereinafter, an operation of the re-measurement will be described. When the re-measurement is performed, the interference during the previous measurement is detected, and the control unit 50 performs the interference avoidance control at the specified measurement point Fn. In this manner, the control unit 50 avoids the interference between the optical measurement unit 30 and the interfered object.

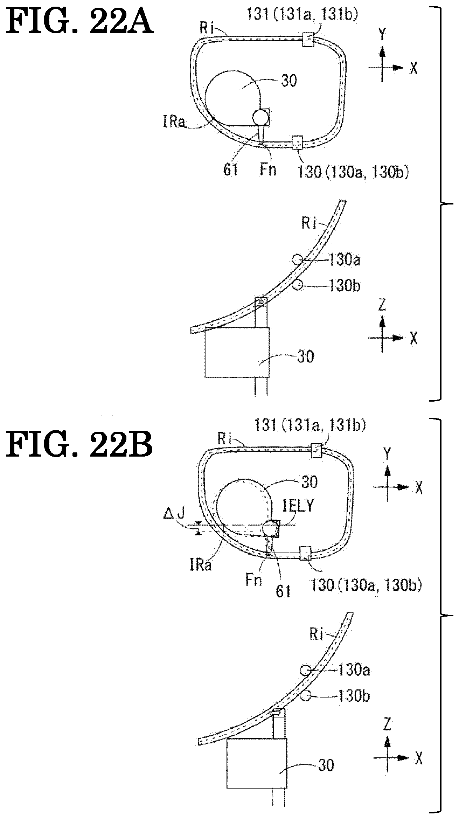

An example of the interference avoidance control in the re-measurement will be described. FIGs. 22A and 22B are views for describing an avoidance operation at the measurement point where the interference occurs. FIG. 22A is a schematic view illustrating a positional relationship between the rim Ri and the optical measurement unit 30 when the interference occurs. In FIG. 22A, the measurement point Fn is a measurement point of the interference occurrence. The upper half of FIG. 22A is a view when the measurement plane is observed in the upward direction of the paper surface, and the lower half of FIG. 22A is a view when the measurement plane is observed in the direction parallel to the Y-axis from the clamp pin 130 side.

For example, with regard to the measurement point Fn in which the interference occurrence is specified, the control unit 50 obtains (calculates) the disposition position (XYZ-coordinate position) of the interference region IR (interference site) on the optical measurement unit 30 during the measurement of the interference occurrence, based on control data during the measurement of the interference occurrence and disposition data of the optical measurement unit 30 with respect to the support unit 70. For example, the control data during the measurement of the interference occurrence is XYZ-position data of the holding unit 25, rotation control data of the rotation unit 260, tilt data of the tracing stylus shaft 62, and movement data in the Z-direction of the tracing stylus shaft 62 with respect to the rotation unit 260. In addition, the disposition data of the interference region IR on the optical measurement unit 30 with respect to the support unit 70 is design value data, and is stored in the memory 52. The disposition position of the interference region IR at the measurement point Fn is stored in the memory 52. For example, the disposition position data of the interference region IR stored in the memory 52 in this case may be only Y-coordinate data, when the interference is avoided in the Y-direction. In addition, the memory 52 may store the control data during the measurement of the interference occurrence, and the disposition position data of the interference region IR may be calculated, based on the stored control data during the re-measurement.

Then, when the measurement point Fn is measured during the re-measurement, the control unit 50 controls the rotation of the movement unit 210 and the rotation unit 260 so that the interference region IR is separated from the calculated disposition position of the interference region IR.

A calculation amount of all disposition positions of the interference region IR increases. Accordingly, as a simple method, one point included in the interference region IR may be set as an interference point IRa, and the disposition position of the interference point IRa may be calculated. The reason is as follows. The re-measurement may be performed as long as a slightly interfering portion is separated from the rim Ri. Accordingly, it is not always necessary to specify all disposition positions of the interference region IR. For example, the interference point IRa is determined as a point where the interference region IR is closest to the rim shape of the measurement result of the rim Ri when the interference occurs. Alternatively, the interference point IRa may be a predetermined site (for example, the interference point IRa may be a point where the interference occurrence is specified according to the shape of the cover 30c of the optical measurement unit 30). Hereinafter, an example of performing the control so that the one interference point IRa is separated from the rim Ri will be described.

Even in the re-measurement, the interference between the rim Ri which is the interfered object and the optical measurement unit 30 may be avoided in at least one of the X-direction, the Y-direction, and the Z-direction. FIG. 22B is a view for describing an example of avoiding the interference in the Y-direction. The upper half of FIG. 22B is a view when the measurement plane is observed in the upward direction of the paper surface, and the lower half of FIG. 22B is a view when the measurement plane is in the direction parallel to the Y-axis observed from the clamp pin 130 side.

For example, at the measurement point Fn where the interference occurrence is specified, the control unit 50 provides an interference avoidance line IELY substantially parallel to the X-direction at a position separated by an avoidance distance ΔJ (for example, 1 mm) from the calculated Y-position of the interference point IRa in the Y-direction (direction to the center line CL side) separated from the rim Ri. Then, when the measurement point Fn is measured during the re-measurement, the control unit 50 controls the rotation of the movement unit 210 and the rotation unit 260 so that the Y-position of the interference point IRa is located on the interference avoidance line IELY (may be moved away inward of the rim from the interference avoidance line IELY). In this manner, the interference between the rim Ri and the optical measurement unit 30 at the measurement point Fn is avoided. When there are a plurality of the specified measurement points Fn of the interference occurrence (including a case where the measurement points Fn of the interference occurrence continuously exist and a case where the measurement points Fn exist at separated positions), the control unit 50 performs the same interference avoidance operation at the plurality of measurement points Fn.

In addition, during the re-measurement, there is a possibility that the measurement point of the interference occurrence may be slightly deviated from the measurement point Fn specified during the interference occurrence. Therefore, for example, an avoidance operation at the measurement point Fn may be performed by including antecedent and later measurement points in view of the deviation in the interference occurrence.

For example, when the re-measurement is performed, at the later measurement point after the avoidance operation at the measurement point Fn is completed, the operation returns to the posture state of the optical measurement unit 30 at the time of the original measurement (posture during the measurement when the interference occurrence is detected or a state where the measurement axis L3 of the tracing stylus 61 has the angle δ in the normal direction with respect to the rim Ri). However, when the operation abruptly returns to the posture state of the optical measurement unit at the time of the original measurement, an orientation of the tracing stylus 61 with respect to the rim Ri (orientation of the measurement axis L3) is abruptly changed, thereby causing a possibility that measurement accuracy may deteriorate. For example, in order to avoid this possibility, when the control unit 50 re-measures the later measurement point after the measurement point Fn of the interference occurrence, the control unit 50 may control the rotation of the movement unit 210 and the rotation unit 260 so that the posture state where the optical measurement unit 30 is caused to perform the interference avoidance operation at the measurement point Fn of the interference occurrence is gradually changed to the posture state of the optical measurement unit 30 at the time of the original measurement. A correction angle of the tracing stylus 61 which is gradually changed for each measurement point is 0.5 degrees. For example, when the measurement points on the entire periphery are 1,000 points, the radius vector angle of one measurement point is 0.36 degrees.

In controlling for gradually changing the posture state of the optical measurement unit 30 at the time of the original measurement, the number of measurement points at the later measurement points may be set to a prescribed value (for example, 50 points), and an angle at which the operation returns to the posture state of the optical measurement unit 30 at the time of the original measurement may be gradually changed by an angle divided by the number of measurement points.

In addition, at the antecedent measurement point previous to the specified measurement point Fn of the interference occurrence, when the posture state of the optical measurement unit at the time of the original measurement is abruptly changed to the posture state of the avoidance operation as in the case of the later measurement point, the orientation of the tracing stylus 61 with respect to the rim Ri is abruptly changed, thereby causing a possibility that the measurement accuracy may deteriorate. Therefore, even at the antecedent measurement point, the control unit 50 may control the drive of the movement unit 210 and the rotation unit 260 so that the posture state of the optical measurement unit 30 at the time of the original measurement is gradually changed to the posture state where the optical measurement unit 30 is caused to perform the interference avoidance operation at the measurement point Fn of the interference occurrence.

In order to simplify the control program during the re-measurement, the measurement at the antecedent measurement point may be controlled as follows. For example, the control unit 50 changes an angle of the measurement axis L3 with respect to the rim Ri by rotating the rotation unit 260. In this case, the control unit 50 controls the operations of the movement unit 210 and the rotation unit 260 so that the position of the tip 61a of the tracing stylus 61 is not changed from the measurement point. In this case, due to a relationship between a rotation speed of the rotation unit 260 and a movement speed of the movement unit 210, a change in the angle of the measurement axis L3 with respect to the rim Ri for each measurement point is limited to a limit angle ΔBA (for example, 10 degrees). That is, the control unit 50 starts to control the rotation unit 260 and the movement unit 210 so that the Y-position of the interference point IRa moves toward the interference avoidance line IELY from the antecedent measurement point having an enough margin of the number of measurement points (for example, the measurement point of 50 points previous to the measurement point Fn). In this case, the control unit 50 controls the change in the angle of the measurement axis L3 with respect to the rim Ri by setting the limit angle ΔBA at one measurement point as an upper limit. For example, when the Y-position of the interference point IRa reaches the interference avoidance line IELY at the measurement point of the third point after an angle change starts in the direction of the tip 61a of the tracing stylus 61, at the subsequent antecedent measurement point, the control unit 50 controls the drive of the movement unit 210 and the rotation unit 260 so that the Y-position of the interference point IRa reaches the interference avoidance line IELY. In this manner, the measurement can be smoothly performed.

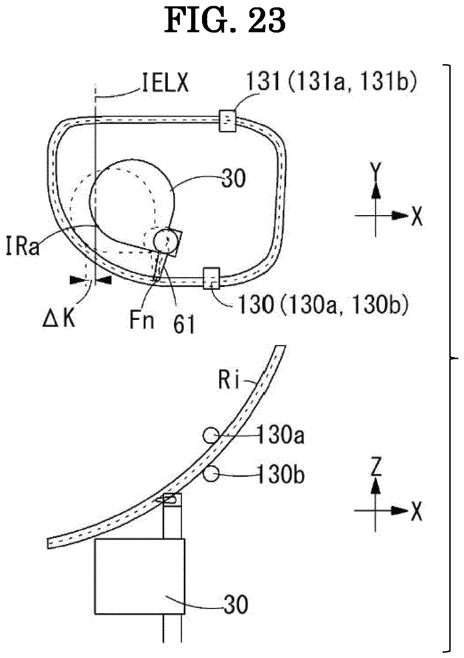

The example of avoiding the interference in the Y-direction has been described above. However, the interference may be avoided in the X-direction. FIG. 23 is a view for describing an example of avoiding the interference in the X-direction. The upper half of FIG. 23 is a view when the measurement plane is observed in the upward direction of the paper surface, and the lower half of FIG. 23 is a view when the measurement plane is observed in the direction parallel to the Y-axis from the clamp pin 130 side.

For example, at the measurement point Fn where the interference occurrence is specified, the control unit 50 provides an interference avoidance line IELX substantially parallel to the Y-direction at a position separated by an avoidance distance ΔK (for example, 1 mm) from the calculated X-position of the interference point IRa in the X-direction separated from the rim Ri. Then, when the measurement point Fn is measured during the re-measurement, the control unit 50 controls the rotation of the movement unit 210 and the rotation unit 260 so that the X-position of the interference point IRa is located on the interference avoidance line IELX (may be moved away inward of the rim from the interference avoidance line IELX). In this manner, the interference between the rim Ri and the optical measurement unit 30 at the measurement point Fn is avoided.

At the later measurement point after the measurement point Fn, as in the avoidance control in the Y-direction, the control unit 50 may perform the control for gradually returning the posture state of the optical measurement unit 30 at the time of the original measurement. In addition, even at the antecedent measurement point previous to the measurement point Fn, as in the avoidance control in the Y-direction, the control unit 50 may perform the control so that the posture state of the optical measurement unit 30 at the time of the original measurement is gradually changed to the posture state where the optical measurement unit 30 is caused to perform the interference avoidance operation at the measurement point Fn of the interference occurrence.

In addition, the avoidance control in the Y-direction and the avoidance control in the X-direction may be used in combination with each other. In this case, when the control is performed so that the optical measurement unit 30 is less moved for avoiding the interference, degradation in the measurement accuracy can be reduced.

In addition, depending on the position of the specified measurement point Fn of the interference occurrence, the interference may be avoided in the Z-direction. For example, as illustrated in FIGs. 18A and 18B, the control unit 50 controls the movement unit 210 to tilt the tracing stylus shaft 62, and the Z-position of the interference point IRa is located below the Z-position when the interference occurs. In this manner, the measurement can be performed by avoiding the interference.

In addition, the example of performing the re-measurement after the measurement of the rim Ri is completed has been described above. However, the measurement may be stopped, and the re-measurement may be performed when the interference occurrence is detected while the rim Ri is measured.

### <Modification Example of Optical Measurement Unit>

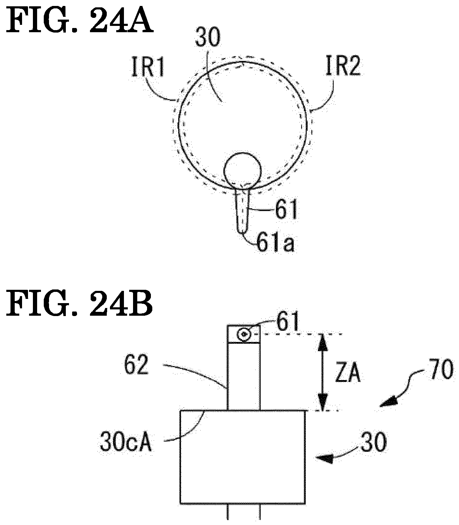

The configuration has been described above in which the optical measurement unit 30 is disposed by being biased to one of the rightward-leftward direction with respect to the tracing stylus 61, when the tracing stylus 61 is viewed in a tip direction thereof. However, the example is not limited thereto. For example, as illustrated in FIGs. 24A and 24B, a configuration may be adopted so that the optical measurement unit 30 is disposed on both right and left sides of the tracing stylus 61, when the tracing stylus 61 is viewed in a tip direction thereof.

FIGs. 24A and 24B are views illustrating a portion of the optical measurement unit 30 and the tracing stylus unit 60 which are supported by the support unit 70 in the modification example. A cover 30Dc of the optical measurement unit 30 is configured to be substantially evenly disposed on both right and left sides across the tracing stylus shaft 62 when viewed in the tip direction of the tracing stylus 61. An appearance of the optical measurement unit 30 according to the modification example is basically the same as that of the optical measurement unit 30 of the previous example illustrated in FIGs. 7 and 8, except that the cover 30Dc is differently disposed in the rightward-leftward direction. In the optical measurement unit 30, in FIG. 24A, the interference region with respect to the interfered object exists in a left semicircular region IR1 and a right semicircular region IR2 on the upper surface of the cover 30Dc.

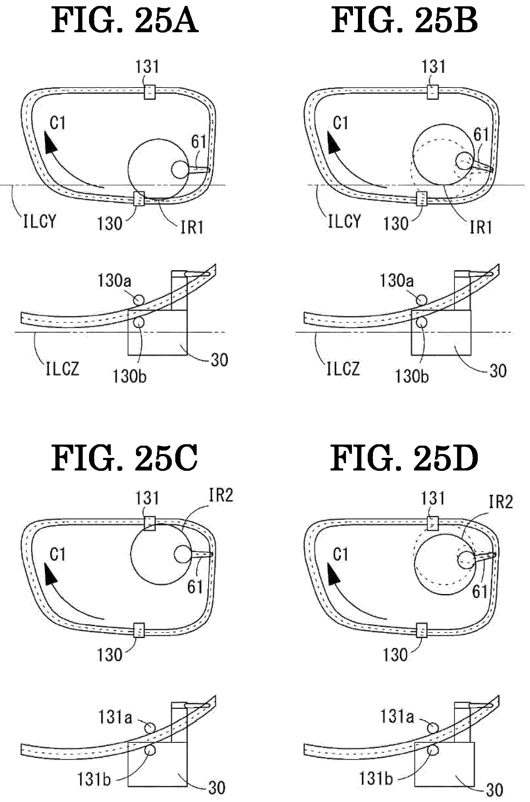

FIGs. 25A to 25D are views for describing an avoidance operation with the interfered object in the eyeglass frame shape measurement apparatus 1 having the optical measurement unit 30 illustrated in FIGs. 24A and 24B. In FIGs. 25A to 25D, a measurement progress direction of the tracing stylus 61 is a direction of an arrow C1 (clockwise direction). The upper half of FIGs. 25A and 25B is a view when the measurement plane is observed in the upward direction of the paper surface, and the lower half of FIGs. 25A and 25B is a view when the measurement plane is observed in the direction parallel to the Y-axis from the clamp pin 130 side. The upper half of FIGs. 25C and 25D is a view when the measurement plane is observed in the upward direction of the paper surface, and the lower half of FIGs. 25C and 25D is a view when the measurement plane is observed in the direction parallel to the Y-axis from the clamp pin 131 side. Even in this example, the interference determination line ILCZ in the Z-direction and the interference determination line ILCY in the Y-direction are set. When the optical measurement unit 30 is located below the interference determination line ILCZ in the Z-direction, the interference between the interfered object and the optical measurement unit 30 does not occur. Accordingly, the control unit 50 performs the normal measurement operation without performing the interference avoidance operation. When the optical measurement unit 30 is located below the interference determination line ILCZ in the Z-direction, the control unit 50 performs the interference avoidance operation as follows.

For example, the control unit 50 performs the interference avoidance operation of the region IR1 of the optical measurement unit 30 located on the front side of the tracing stylus 61, based on the interference determination line ILCY in the Y-direction. The control unit 50 performs the interference avoidance operation of the region IR2 of the optical measurement unit 30 located on the rear side of the tracing stylus 61, based on the disposition information of the rim holding member and the measured result of the rim Ri.

FIG. 25A is an example of a case where the region IR1 on the front side of the tracing stylus 61 is closer to the clamp pin 130b side from the interference determination line ILCY in the Y-direction. In this case, as illustrated in FIG. 25B, the control unit 50 controls the operations of the movement unit 210 and the rotation unit 260 so that the region IR1 is not located on the clamp pin 130b side from the interference determination line ILCY in the Y-direction.

FIG. 25C is an example of a case where the region IR2 located on the rear side of the tracing stylus 61 is closer to the clamp pin 131 and the measured rim Ri. In this case, as illustrated in FIG. 25D, the control unit 50 controls the operations of the movement unit 210 and the rotation unit 260 so that the region IR2 is separated from the clamp pin 131 and the rim Ri, based on the disposition information of the clamp pin 131 and the measured result of the rim Ri.

According to this interference avoidance control, even in a case of the configuration in which the optical measurement unit 30 is located on both right and left sides of the tracing stylus 61 (right and left when viewed in the tip direction of the tracing stylus 6), the measurement for avoiding the interference can be satisfactorily performed.

The typical embodiments of the present disclosure have been described above. However, without being limited to the embodiments described herein, various modifications of the present disclosure can be made within the scope as defined by the claims.

## Claims

1. An eyeglass frame shape measurement apparatus (1) that measures a shape of a rim (Ri) of an eyeglass frame (F), comprising:
a frame holding means (10) that has a rim holding member configured to hold the rim (Ri) of the eyeglass frame (F);
a tracing stylus unit (60) that has a tracing stylus (61) inserted into a groove of the rim (Ri);
an optical measurement unit (30) configured to optically measure a shape of the groove of the rim (Ri);
a support unit (70) configured to integrally support the tracing stylus unit (60) and the optical measurement unit (30);
a changing means (210, 260) configured to change a relative positional relationship of an interfering object including at least one of the tracing stylus unit (60), the optical measurement unit (30) and the support unit (70), with respect to an interfered object including at least one of the rim (Ri) of the eyeglass frame (F) held by the frame holding means (10) and the rim holding member;
an interference information acquisition means (50) configured to acquire interference information including position information of the interfered object; and
a control means (50) configured to control the changing means (210, 260) to avoid interference of the interfering object with respect to the interfered object, at a time of measurement of the rim (Ri), based on the interference information acquired by the interference information acquisition means (50).

2. The eyeglass frame shape measurement apparatus (1) according to claim 1,
wherein the rim holding member is configured to extend inward of the rim in a radius vector plane during measurement,
the interference information includes disposition information of the rim holding member in a state where the rim of the eyeglass frame (F) is held, and
the control means (50) is configured to control the changing means (210, 260) such that the interfering object has a prescribed distance or longer from the rim holding member in at least one direction of a radius vector direction and a perpendicular direction perpendicular to the radius vector direction, based on the disposition information of the rim holding member.

3. The eyeglass frame shape measurement apparatus (1) according to claim 2,
wherein the control means (50) is configured to control the changing means (210, 260) such that the interfering object has a prescribed distance or longer in the radius vector direction with respect to the rim holding member extending inward of the rim (Ri).

4. The eyeglass frame shape measurement apparatus (1) according to claim 2 or 3,
wherein the changing means (210, 260) includes a rotation means that rotates the support unit (70) around an axis extending in the perpendicular direction perpendicular to the radius vector direction, and
the control means (50) is configured to control the rotation means such that a distance between the rim holding member and the interfering object is a prescribed distance or longer in the radius vector direction, at a time of measurement of an unmeasured portion of the rim (Ri).

5. The eyeglass frame shape measurement apparatus (1) according to any one of claims 1 to 4, further comprising:
an interference occurrence detection means configured to detect whether or not the interference between the interfering object and the interfered object occurs during the measurement of the rim (Ri), based on a measurement result of the rim (Ri);
a re-measurement performing means configured to perform re-measurement of the shape of the rim (Ri) in a case where the interference occurrence detection means detects that the interference occurs; and
a measurement point (Fn) specifying means configured to specify a measurement point (Fn) where the interference between the interfered object and the interfering object occurs, based on a detection result of the interference occurrence detection means,
wherein when the specified measurement point (Fn) is re-measured, the control means (50) is configured to control the changing means (210, 260) to perform an interference avoidance operation different from an interference avoidance operation performed before the interfering object is re-measured.

6. The eyeglass frame measurement apparatus (1) according to claim 1, further comprising:
an interference occurrence detection means configured to detect whether or not the interference of the interfering object with respect to the interfered object occurs during the measurement of the rim (Ri), based on a measurement result of the rim (Ri);
a re-measurement performing means configured to perform re-measurement of the shape of the rim (Ri) in a case where the interference occurrence detection means detects that the interference occurs; and
a measurement point (Fn) specifying means configured to specify a measurement point (Fn) where the interference between the interfered object and the interfering object occurs, based on a detection result of the interference occurrence detection means,
wherein when the specified measurement point (Fn) is re-measured, the control means (50) is configured to control the changing means (210, 260) to perform an interference avoidance operation of the interfering object.

7. The eyeglass frame shape measurement apparatus (1) according to claim 5 or 6, further comprising:
a calculation means configured to calculate a disposition position of an interference site of the interfering object at the specified measurement point (Fn), based on control information of the changing means (210, 260),
wherein when the specified measurement point (Fn) is re-measured, the control means (50) is configured to perform the interference avoidance operation in at least one direction of a radius vector direction and a perpendicular direction perpendicular to the radius vector direction with respect to the disposition position of the interference site calculated by the calculation means.

8. The eyeglass frame shape measurement apparatus (1) according to claim 7,
wherein when the specified measurement point (Fn) is measured, the control means (50) is configured to perform the interference avoidance operation such that an interference point, which is included in the interference site and determined on the interfering object, is a prescribed distance or longer apart in an inward direction of the rim (Ri) in a radius vector direction with respect to the disposition position of the interference point.

9. The eyeglass frame shape measurement apparatus (1) according to any one of claims 5 to 8,
wherein when a later measurement point (Fn) after the specified measurement point (Fn) of the interference occurrence is re-measured, the control means (50) is configured to control the changing means (210, 260) such that a posture state of the interfering object where the interfering object is caused to perform an interference avoidance operation at the measurement point (Fn) of the interference occurrence is gradually changed to a posture state of the interfering object at original measurement.

10. The eyeglass frame shape measurement apparatus (1) according to any one of claims 5 to 9,
wherein when an antecedent measurement point (Fn) previous to the specified measurement point (Fn) of the interference occurrence is re-measured, the control means (50) is configured to control the changing means (210, 260) such that a posture state of the interfering object at original measurement is gradually changed to a posture state of the interfering object where the interfering object is caused to perform an interference avoidance operation at the measurement point (Fn) of the interference occurrence.

11. A control program executed by a control unit (50) of an eyeglass frame (F) shape measurement apparatus (1) including a frame holding means (10) that has a rim holding member for holding an eyeglass frame (F) in a measurement state, a tracing stylus unit (60) that has a tracing stylus (61) inserted into a groove of the rim (Ri), an optical measurement unit (30) for optically measuring a shape of the groove of the rim (Ri), a support unit (70) that integrally supports the tracing stylus unit (60) and the optical measurement unit (30), and a changing means (210, 260) that changes a relative positional relationship of an interfering object including at least one of the tracing stylus unit (60), the optical measurement unit (30) and the support unit (70), with respect to an interfered object including at least one of the rim (Ri) of the eyeglass frame (F) held by the frame holding means (10) and the rim holding member, and an interference information acquisition means (50) configured to acquire interference information including position information of the interfered object;
wherein the control program comprises instructions which cause the eyeglass frame shape measurement apparatus (1) to perform:
a control step of controlling the changing means (210, 260) to avoid interference of the interfering object with respect to the interfered object, at a time of measurement of the rim (Ri), based on the interference information acquired by the interference information acquisition means (50).

12. The control program for the eyeglass frame shape measurement apparatus (1) according to claim 11,
wherein the control program further comprises instructions which cause the eyeglass frame shape measurement apparatus (1) to perform:
an interference occurrence detection step of detecting whether or not interference between the interfered object and the interfering object occurs during measurement of the rim, based on a measurement result of the rim (Ri);
a re-measurement performance step of performing re-measurement of a shape of the rim (Ri) in a case where occurrence of the interference is detected by the interference occurrence detection step; and
a measurement point (Fn) specifying step of specifying a measurement point (Fn) where the interference between the interfered object and the interfering object occurs, based on a detection result of the interference occurrence detection step, and
when the specified measurement point (Fn) is re-measured, the control step is configured such that the control unit (50) controls the changing means (210, 260) to perform an interference avoidance operation different from an interference avoidance operation performed before the interfering object is re-measured.

13. The control program for the eyeglass frame shape measurement apparatus (1) according to claim 11,
wherein the control program further comprises instructions which cause the eyeglass frame shape measurement apparatus (1) to perform:
an interference occurrence detection step of detecting whether or not interference between the interfered object and the interfering object occurs during measurement of the rim (Ri), based on a measurement result of the rim (Ri);
a re-measurement performance step of performing re-measurement of a shape of the rim in a case where occurrence of the interference is detected by the interference occurrence detection step; and
a measurement point (Fn) specifying step of specifying a measurement point (Fn) where the interference between the interfered object and the interfering object occurs, based on a detection result of the interference occurrence detection step, and
when the specified measurement point (Fn) is re-measured, the control step is configured such that the control unit (50) controls the changing means (210, 260) to perform an interference avoidance operation of the interfering object.

## Patentansprüche

1. Brillenfassungsformmessvorrichtung (1), die eine Form eines Rands (Ri) einer Brillenfassung (F) misst, umfassend:
ein Fassungshaltemittel (10), das ein Randhalteelement aufweist, das konfiguriert ist, um den Rand (Ri) der Brillenfassung (F) zu halten;
eine Abtaststifteinheit (60), die einen Abtaststift (61) aufweist, der in eine Nut des Rands (Ri) eingesetzt ist;
eine optische Messeinheit (30), die konfiguriert ist, um eine Form der Nut des Rands (Ri) optisch zu messen;
eine Stützeinheit (70), die konfiguriert ist, um die Abtaststifteinheit (60) und die optische Messeinheit (30) integral zu stützen;
ein Änderungsmittel (210, 260), das konfiguriert ist, um eine relative Positionsbeziehung eines interferierenden Objekts, das mindestens eines von der Abtaststifteinheit (60), der optischen Messeinheit (30) und der Stützeinheit (70) beinhaltet, in Bezug auf ein interferiertes Objekt, das mindestens eines von dem Rand (Ri) der Brillenfassung (F) beinhaltet, der durch das Fassungshaltemittel (10) und das Randhalteelement gehalten wird, zu ändern;
ein Interferenzinformationserfassungsmittel (50), das konfiguriert ist, um Interferenzinformationen zu erfassen, die Positionsinformationen des interferierten Objekts beinhalten; und
ein Steuermittel (50), das konfiguriert ist, um das Änderungsmittel (210, 260) zu steuern, um eine Interferenz des interferierenden Objekts in Bezug auf das interferierte Objekt zu einem Zeitpunkt der Messung des Rands (Ri) basierend auf den Interferenzinformationen, die durch das Interferenzinformationserfassungsmittel (50) erfasst werden, zu vermeiden.

2. Brillenfassungsformmessvorrichtung (1) nach Anspruch 1,
wobei das Randhalteelement konfiguriert ist, um sich während der Messung in einer Radiusvektorebene nach innen von dem Rand zu erstrecken,
die Interferenzinformationen Anordnungsinformationen des Randhalteelements in einem Zustand beinhalten, in dem der Rand der Brillenfassung (F) gehalten wird, und
das Steuermittel (50) konfiguriert ist, um das Änderungsmittel (210, 260) basierend auf den Anordnungsinformationen des Randhalteelements so zu steuern, dass das interferierende Objekt einen vorgeschriebenen Abstand oder mehr von dem Randhalteelement in mindestens einer Richtung einer Radiusvektorrichtung und einer senkrechten Richtung senkrecht zu der Radiusvektorrichtung aufweist.

3. Brillenfassungsformmessvorrichtung (1) nach Anspruch 2,
wobei das Steuermittel (50) konfiguriert ist, um das Änderungsmittel (210, 260) so zu steuern, dass das interferierende Objekt einen vorgeschriebenen Abstand oder mehr in der Radiusvektorrichtung in Bezug auf das Randhalteelement, das sich nach innen von dem Rand (Ri) erstreckt, aufweist.

4. Brillenfassungsformmessvorrichtung (1) nach Anspruch 2 oder 3,
wobei das Änderungsmittel (210, 260) ein Drehmittel beinhaltet, das die Stützeinheit (70) um eine Achse dreht, die sich in der senkrechten Richtung senkrecht zu der Radiusvektorrichtung erstreckt, und
das Steuermittel (50) konfiguriert ist, um das Drehmittel zu einem Zeitpunkt der Messung eines nicht gemessenen Abschnitts des Rands (Ri) so zu steuern, dass ein Abstand zwischen dem Randhalteelement und dem interferierenden Objekt ein vorgeschriebener Abstand oder mehr in der Radiusvektorrichtung ist.

5. Brillenfassungsformmessvorrichtung (1) nach einem der Ansprüche 1 bis 4, ferner umfassend:
ein Interferenzauftrittserfassungsmittel, das konfiguriert ist, um basierend auf einem Messergebnis des Rands (Ri) zu erfassen, ob die Interferenz zwischen dem interferierenden Objekt und dem interferierten Objekt während der Messung des Rands (Ri) auftritt oder nicht;
ein Neumessungsdurchführungsmittel, das konfiguriert ist, um eine Neumessung der Form des Rands (Ri) in einem Fall durchzuführen, in dem das Interferenzauftrittserfassungsmittel erfasst, dass die Interferenz auftritt; und
ein Messpunktspezifizierungsmittel (Fn), das konfiguriert ist, um basierend auf einem Erfassungsergebnis des Interferenzauftrittserfassungsmittels einen Messpunkt (Fn) zu spezifizieren, an dem die Interferenz zwischen dem interferierten Objekt und dem interferierenden Objekt auftritt,
wobei, wenn der spezifizierte Messpunkt (Fn) neu gemessen wird, das Steuermittel (50) konfiguriert ist, um das Änderungsmittel (210, 260) zu steuern, um einen Interferenzvermeidungsvorgang durchzuführen, der sich von einem Interferenzvermeidungsvorgang unterscheidet, der durchgeführt wird, bevor das interferierende Objekt neu gemessen wird.

6. Brillenfassungsmessvorrichtung (1) nach Anspruch 1, ferner umfassend:
ein Interferenzauftrittserfassungsmittel, das konfiguriert ist, um basierend auf einem Messergebnis des Rands (Ri) zu erfassen, ob die Interferenz des interferierenden Objekts in Bezug auf das interferierte Objekt während der Messung des Rands (Ri) auftritt oder nicht;
ein Neumessungsdurchführungsmittel, das konfiguriert ist, um eine Neumessung der Form des Rands (Ri) in einem Fall durchzuführen, in dem das Interferenzauftrittserfassungsmittel erfasst, dass die Interferenz auftritt; und
ein Messpunktspezifizierungsmittel (Fn), das konfiguriert ist, um basierend auf einem Erfassungsergebnis des Interferenzauftrittserfassungsmittels einen Messpunkt (Fn) zu spezifizieren, an dem die Interferenz zwischen dem interferierten Objekt und dem interferierenden Objekt auftritt,
wobei, wenn der spezifizierte Messpunkt (Fn) neu gemessen wird, das Steuermittel (50) konfiguriert ist, um das Änderungsmittel (210, 260) zu steuern, um einen Interferenzvermeidungsvorgang des interferierenden Objekts durchzuführen.

7. Brillenfassungsformmessvorrichtung (1) nach Anspruch 5 oder 6, ferner umfassend:
ein Berechnungsmittel, das konfiguriert ist, um basierend auf Steuerinformationen des Änderungsmittels (210, 260) eine Anordnungsposition einer Interferenzstelle des interferierenden Objekts an dem spezifizierten Messpunkt (Fn) zu berechnen,
wobei, wenn der spezifizierte Messpunkt (Fn) neu gemessen wird, das Steuermittel (50) konfiguriert ist, um den Interferenzvermeidungsvorgang in mindestens einer Richtung einer Radiusvektorrichtung und einer senkrechten Richtung senkrecht zu der Radiusvektorrichtung in Bezug auf die Anordnungsposition der Interferenzstelle, die durch das Berechnungsmittel berechnet wird, durchzuführen.

8. Brillenfassungsformmessvorrichtung (1) nach Anspruch 7,
wobei, wenn der spezifizierte Messpunkt (Fn) gemessen wird, das Steuermittel (50) konfiguriert ist, um den Interferenzvermeidungsvorgang so durchzuführen, dass ein Interferenzpunkt, der in der Interferenzstelle beinhaltet ist und an dem interferierenden Objekt bestimmt wird, einen vorgeschriebenen Abstand oder mehr in einer nach innen gerichteten Richtung des Rands (Ri) in einer Radiusvektorrichtung in Bezug auf die Anordnungsposition des Interferenzpunkts aufweist.

9. Brillenfassungsformmessvorrichtung (1) nach einem der Ansprüche 5 bis 8,
wobei, wenn ein späterer Messpunkt (Fn) nach dem spezifizierten Messpunkt (Fn) des Interferenzauftritts neu gemessen wird, das Steuermittel (50) konfiguriert ist, um das Änderungsmittel (210, 260) so zu steuern, dass ein Haltungszustand des interferierenden Objekts, in dem das interferierende Objekt veranlasst wird, einen Interferenzvermeidungsvorgang an dem Messpunkt (Fn) des Interferenzauftritts durchzuführen, allmählich in einen Haltungszustand des interferierenden Objekts bei der ursprünglichen Messung geändert wird.

10. Brillenfassungsformmessvorrichtung (1) nach einem der Ansprüche 5 bis 9,
wobei, wenn ein vorhergehender Messpunkt (Fn) vor dem spezifizierten Messpunkt (Fn) des Interferenzauftritts neu gemessen wird, das Steuermittel (50) konfiguriert ist, um das Änderungsmittel (210, 260) so zu steuern, dass ein Haltungszustand des interferierenden Objekts bei der ursprünglichen Messung allmählich in einen Haltungszustand des interferierenden Objekts geändert wird, in dem das interferierende Objekt veranlasst wird, einen Interferenzvermeidungsvorgang an dem Messpunkt (Fn) des Interferenzauftritts durchzuführen.

11. Steuerprogramm, das durch eine Steuereinheit (50) einer Brillenfassungsformmessvorrichtung (1) (F) ausgeführt wird, die ein Fassungshaltemittel (10), das ein Randhalteelement zum Halten einer Brillenfassung (F) in einem Messzustand aufweist, eine Abtaststifteinheit (60), die einen Abtaststift (61) aufweist, der in eine Nut des Rands (Ri) eingesetzt ist, eine optische Messeinheit (30) zum optischen Messen einer Form der Nut des Rands (Ri), eine Stützeinheit (70), die die Abtaststifteinheit (60) und die optische Messeinheit (30) integral stützt, und ein Änderungsmittel (210, 260), das eine relative Positionsbeziehung eines interferierenden Objekts, das mindestens eines von der Abtaststifteinheit (60), der optischen Messeinheit (30) und der Stützeinheit (70) beinhaltet, in Bezug auf ein interferiertes Objekt, das mindestens eines von dem Rand (Ri) der Brillenfassung (F) beinhaltet, der durch das Fassungshaltemittel (10) und das Randhalteelement gehalten wird, ändert, und ein Interferenzinformationserfassungsmittel (50), das konfiguriert ist, um Interferenzinformationen zu erfassen, die Positionsinformationen des interferierten Objekts beinhalten, umfasst;
wobei das Steuerprogramm Anweisungen umfasst, die die Brillenfassungsformmessvorrichtung (1) veranlassen, Folgendes durchzuführen:
einen Steuerschritt des Steuerns des Änderungsmittels (210, 260), um eine Interferenz des interferierenden Objekts in Bezug auf das interferierte Objekt zu einem Zeitpunkt der Messung des Rands (Ri) basierend auf den Interferenzinformationen, die durch das Interferenzinformationserfassungsmittel (50) erfasst werden, zu vermeiden.

12. Steuerprogramm für die Brillenfassungsformmessvorrichtung (1) nach Anspruch 11,
wobei das Steuerprogramm ferner Anweisungen umfasst, die die Brillenfassungsformmessvorrichtung (1) veranlassen, Folgendes durchzuführen:
einen Interferenzauftrittserfassungsschritt des Erfassens basierend auf einem Messergebnis des Rands (Ri), ob eine Interferenz zwischen dem interferierten Objekt und dem interferierenden Objekt während der Messung des Rands auftritt oder nicht;
einen Neumessungsdurchführungsschritt des Durchführens einer Neumessung einer Form des Rands (Ri) in einem Fall, in dem das Auftreten der Interferenz durch den Interferenzauftrittserfassungsschritt erfasst wird; und
einen Messpunktspezifizierungsschritt (Fn) des Spezifizierens eines Messpunkts (Fn), an dem die Interferenz zwischen dem interferierten Objekt und dem interferierenden Objekt auftritt, basierend auf einem Erfassungsergebnis des Interferenzauftrittserfassungsschritts, und
wenn der spezifizierte Messpunkt (Fn) neu gemessen wird, der Steuerschritt so konfiguriert ist, dass die Steuereinheit (50) das Änderungsmittel (210, 260) steuert, um einen Interferenzvermeidungsvorgang durchzuführen, der sich von einem Interferenzvermeidungsvorgang unterscheidet, der durchgeführt wird, bevor das interferierende Objekt neu gemessen wird.

13. Steuerprogramm für die Brillenfassungsformmessvorrichtung (1) nach Anspruch 11,
wobei das Steuerprogramm ferner Anweisungen umfasst, die die Brillenfassungsformmessvorrichtung (1) veranlassen, Folgendes durchzuführen:
einen Interferenzauftrittserfassungsschritt des Erfassens basierend auf einem Messergebnis des Rands (Ri), ob eine Interferenz zwischen dem interferierten Objekt und dem interferierenden Objekt während der Messung des Rands (Ri) auftritt oder nicht;
einen Neumessungsdurchführungsschritt des Durchführens einer Neumessung einer Form des Rands in einem Fall, in dem das Auftreten der Interferenz durch den Interferenzauftrittserfassungsschritt erfasst wird; und
einen Messpunktspezifizierungsschritt (Fn) des Spezifizierens eines Messpunkts (Fn), an dem die Interferenz zwischen dem interferierten Objekt und dem interferierenden Objekt auftritt, basierend auf einem Erfassungsergebnis des Interferenzauftrittserfassungsschritts, und
wenn der spezifizierte Messpunkt (Fn) neu gemessen wird, der Steuerschritt so konfiguriert ist, dass die Steuereinheit (50) das Änderungsmittel (210, 260) steuert, um einen Interferenzvermeidungsvorgang des interferierenden Objekts durchzuführen.

## Revendications

1. Appareil de mesure de forme de monture de lunettes (1) qui mesure une forme d'un bord (Ri) d'une monture de lunettes (F), comprenant :
un moyen de maintien de monture (10) qui a un élément de maintien de bord configuré pour maintenir le bord (Ri) de la monture de lunettes (F) ;
une unité de stylet de traçage (60) qui a un stylet de traçage (61) inséré dans une rainure du bord (Ri) ;
une unité de mesure optique (30) configurée pour mesurer optiquement une forme de la rainure du bord (Ri) ;
une unité de support (70) configurée pour supporter intégralement l'unité de stylet de traçage (60) et l'unité de mesure optique (30) ;
un moyen de changement (210, 260) configuré pour changer une relation de position relative d'un objet interférant incluant au moins l'une de l'unité de stylet de traçage (60), de l'unité de mesure optique (30) et de l'unité de support (70), par rapport à un objet interféré incluant au moins l'un du bord (Ri) de la monture de lunettes (F) maintenue par le moyen de maintien de monture (10) et de l'élément de maintien de bord ;
un moyen d'acquisition d'informations d'interférence (50) configuré pour acquérir des informations d'interférence incluant des informations de position de l'objet interféré ; et
un moyen de commande (50) configuré pour commander le moyen de changement (210, 260) pour éviter une interférence de l'objet interférant par rapport à l'objet interféré, à un moment de mesure du bord (Ri), sur la base des informations d'interférence acquises par le moyen d'acquisition d'informations d'interférence (50).

2. Appareil de mesure de forme de monture de lunettes (1) selon la revendication 1,
dans lequel l'élément de maintien de bord est configuré pour s'étendre vers l'intérieur du bord dans un plan de vecteur de rayon pendant la mesure,
les informations d'interférence incluent des informations de disposition de l'élément de maintien de bord dans un état où le bord de la monture de lunettes (F) est maintenu, et
le moyen de commande (50) est configuré pour commander le moyen de changement (210, 260) de sorte que l'objet interférant a une distance prescrite ou plus longue de l'élément de maintien de bord dans au moins une direction parmi une direction de vecteur de rayon et une direction perpendiculaire perpendiculaire à la direction de vecteur de rayon, sur la base des informations de disposition de l'élément de maintien de bord.

3. Appareil de mesure de forme de monture de lunettes (1) selon la revendication 2,
dans lequel le moyen de commande (50) est configuré pour commander le moyen de changement (210, 260) de sorte que l'objet interférant a une distance prescrite ou plus longue dans la direction de vecteur de rayon par rapport à l'élément de maintien de bord s'étendant vers l'intérieur du bord (Ri).

4. Appareil de mesure de forme de monture de lunettes (1) selon la revendication 2 ou 3,
dans lequel le moyen de changement (210, 260) inclut un moyen de rotation qui fait tourner l'unité de support (70) autour d'un axe s'étendant dans la direction perpendiculaire perpendiculaire à la direction de vecteur de rayon, et
le moyen de commande (50) est configuré pour commander le moyen de rotation de sorte qu'une distance entre l'élément de maintien de bord et l'objet interférant est une distance prescrite ou plus longue dans la direction de vecteur de rayon, à un moment de mesure d'une partie non mesurée du bord (Ri).

5. Appareil de mesure de forme de monture de lunettes (1) selon l'une quelconque des revendications 1 à 4, comprenant en outre :
un moyen de détection d'occurrence d'interférence configuré pour détecter si oui ou non l'interférence entre l'objet interférant et l'objet interféré se produit pendant la mesure du bord (Ri), sur la base d'un résultat de mesure du bord (Ri) ;
un moyen d'exécution de remesure configuré pour exécuter une remesure de la forme du bord (Ri) dans un cas où le moyen de détection d'occurrence d'interférence détecte que l'interférence se produit ; et
un moyen de spécification de point de mesure (Fn) configuré pour spécifier un point de mesure (Fn) où l'interférence entre l'objet interféré et l'objet interférant se produit, sur la base d'un résultat de détection du moyen de détection d'occurrence d'interférence,
dans lequel lorsque le point de mesure spécifié (Fn) est remesuré, le moyen de commande (50) est configuré pour commander le moyen de changement (210, 260) pour exécuter une opération d'évitement d'interférence différente d'une opération d'évitement d'interférence exécutée avant que l'objet interférant ne soit remesuré.

6. Appareil de mesure de monture de lunettes (1) selon la revendication 1, comprenant en outre :
un moyen de détection d'occurrence d'interférence configuré pour détecter si oui ou non l'interférence de l'objet interférant par rapport à l'objet interféré se produit pendant la mesure du bord (Ri), sur la base d'un résultat de mesure du bord (Ri) ;
un moyen d'exécution de remesure configuré pour exécuter une remesure de la forme du bord (Ri) dans un cas où le moyen de détection d'occurrence d'interférence détecte que l'interférence se produit ; et
un moyen de spécification de point de mesure (Fn) configuré pour spécifier un point de mesure (Fn) où l'interférence entre l'objet interféré et l'objet interférant se produit, sur la base d'un résultat de détection du moyen de détection d'occurrence d'interférence,
dans lequel lorsque le point de mesure spécifié (Fn) est remesuré, le moyen de commande (50) est configuré pour commander le moyen de changement (210, 260) pour exécuter une opération d'évitement d'interférence de l'objet interférant.

7. Appareil de mesure de forme de monture de lunettes (1) selon la revendication 5 ou 6, comprenant en outre :
un moyen de calcul configuré pour calculer une position de disposition d'un site d'interférence de l'objet interférant au point de mesure spécifié (Fn), sur la base d'informations de commande du moyen de changement (210, 260),
dans lequel lorsque le point de mesure spécifié (Fn) est remesuré, le moyen de commande (50) est configuré pour exécuter l'opération d'évitement d'interférence dans au moins une direction parmi une direction de vecteur de rayon et une direction perpendiculaire perpendiculaire à la direction de vecteur de rayon par rapport à la position de disposition du site d'interférence calculée par le moyen de calcul.

8. Appareil de mesure de forme de monture de lunettes (1) selon la revendication 7,
dans lequel lorsque le point de mesure spécifié (Fn) est mesuré, le moyen de commande (50) est configuré pour exécuter l'opération d'évitement d'interférence de sorte qu'un point d'interférence, qui est inclus dans le site d'interférence et déterminé sur l'objet interférant, est une distance prescrite ou plus longue dans une direction vers l'intérieur du bord (Ri) dans une direction de vecteur de rayon par rapport à la position de disposition du point d'interférence.

9. Appareil de mesure de forme de monture de lunettes (1) selon l'une quelconque des revendications 5 à 8,
dans lequel lorsqu'un point de mesure ultérieur (Fn) après le point de mesure spécifié (Fn) de l'occurrence d'interférence est remesuré, le moyen de commande (50) est configuré pour commander le moyen de changement (210, 260) de sorte qu'un état de posture de l'objet interférant où l'objet interférant est amené à exécuter une opération d'évitement d'interférence au point de mesure (Fn) de l'occurrence d'interférence est progressivement changé en un état de posture de l'objet interférant à la mesure d'origine.

10. Appareil de mesure de forme de monture de lunettes (1) selon l'une quelconque des revendications 5 à 9,
dans lequel lorsqu'un point de mesure antérieur (Fn) avant le point de mesure spécifié (Fn) de l'occurrence d'interférence est remesuré, le moyen de commande (50) est configuré pour commander le moyen de changement (210, 260) de sorte qu'un état de posture de l'objet interférant à la mesure d'origine est progressivement changé en un état de posture de l'objet interférant où l'objet interférant est amené à exécuter une opération d'évitement d'interférence au point de mesure (Fn) de l'occurrence d'interférence.

11. Programme de commande exécuté par une unité de commande (50) d'un appareil de mesure de forme (1) de monture de lunettes (F) incluant un moyen de maintien de monture (10) qui a un élément de maintien de bord pour maintenir une monture de lunettes (F) dans un état de mesure, une unité de stylet de traçage (60) qui a un stylet de traçage (61) inséré dans une rainure du bord (Ri), une unité de mesure optique (30) pour mesurer optiquement une forme de la rainure du bord (Ri), une unité de support (70) qui supporte intégralement l'unité de stylet de traçage (60) et l'unité de mesure optique (30), et un moyen de changement (210, 260) qui change une relation de position relative d'un objet interférant incluant au moins l'une de l'unité de stylet de traçage (60), de l'unité de mesure optique (30) et de l'unité de support (70), par rapport à un objet interféré incluant au moins l'un du bord (Ri) de la monture de lunettes (F) maintenue par le moyen de maintien de monture (10) et de l'élément de maintien de bord, et un moyen d'acquisition d'informations d'interférence (50) configuré pour acquérir des informations d'interférence incluant des informations de position de l'objet interféré ;
dans lequel le programme de commande comprend des instructions qui amènent l'appareil de mesure de forme de monture de lunettes (1) à exécuter :
une étape de commande consistant à commander le moyen de changement (210, 260) pour éviter une interférence de l'objet interférant par rapport à l'objet interféré, à un moment de mesure du bord (Ri), sur la base des informations d'interférence acquises par le moyen d'acquisition d'informations d'interférence (50).

12. Programme de commande pour l'appareil de mesure de forme de monture de lunettes (1) selon la revendication 11,
dans lequel le programme de commande comprend en outre des instructions qui amènent l'appareil de mesure de forme de monture de lunettes (1) à exécuter :
une étape de détection d'occurrence d'interférence consistant à détecter si oui ou non une interférence entre l'objet interféré et l'objet interférant se produit pendant une mesure du bord, sur la base d'un résultat de mesure du bord (Ri) ;
une étape d'exécution de remesure consistant à exécuter une remesure d'une forme du bord (Ri) dans un cas où une occurrence de l'interférence est détectée par l'étape de détection d'occurrence d'interférence ; et
une étape de spécification de point de mesure (Fn) consistant à spécifier un point de mesure (Fn) où l'interférence entre l'objet interféré et l'objet interférant se produit, sur la base d'un résultat de détection de l'étape de détection d'occurrence d'interférence, et
lorsque le point de mesure spécifié (Fn) est remesuré, l'étape de commande est configurée de sorte que l'unité de commande (50) commande le moyen de changement (210, 260) pour exécuter une opération d'évitement d'interférence différente d'une opération d'évitement d'interférence exécutée avant que l'objet interférant ne soit remesuré.

13. Programme de commande pour l'appareil de mesure de forme de monture de lunettes (1) selon la revendication 11,
dans lequel le programme de commande comprend en outre des instructions qui amènent l'appareil de mesure de forme de monture de lunettes (1) à exécuter :
une étape de détection d'occurrence d'interférence consistant à détecter si oui ou non une interférence entre l'objet interféré et l'objet interférant se produit pendant une mesure du bord (Ri), sur la base d'un résultat de mesure du bord (Ri) ;
une étape d'exécution de remesure consistant à exécuter une remesure d'une forme du bord dans un cas où une occurrence de l'interférence est détectée par l'étape de détection d'occurrence d'interférence ; et
une étape de spécification de point de mesure (Fn) consistant à spécifier un point de mesure (Fn) où l'interférence entre l'objet interféré et l'objet interférant se produit, sur la base d'un résultat de détection de l'étape de détection d'occurrence d'interférence, et
lorsque le point de mesure spécifié (Fn) est remesuré, l'étape de commande est configurée de sorte que l'unité de commande (50) commande le moyen de changement (210, 260) pour exécuter une opération d'évitement d'interférence de l'objet interférant.
